# EUROPEAN PATENT APPLICATION

(11) **EP 4 653 327 A1**
(43) Date of publication of application: **26.11.2025**
(21) Application number: 23917627.4
(22) Date of filing: 08.11.2023
(51) Int. Cl.: B64U 50/19, B64C 39/02, B64D 27/24, B64U 10/16, B64U 20/80, B64U 20/96, B64U 30/10, H02P 5/74

(54) **PROPULSION DEVICE**

(30) Priority: 17.01.2023 JP 2023005266; 27.10.2023 JP 2023184834
(71) Applicant: DENSO CORPORATION, Kariya-city, Aichi 448-8661 (JP)
(72) Inventor: SUZUKI Hideaki, Kariya- city Aichi 4488661 (JP); KAWAZU Shinsuke, Kariya- city Aichi 4488661 (JP); HAYASHI Jiro, Kariya- city Aichi 4488661 (JP); NAKATA Shingo, Kariya- city Aichi 4488661 (JP)
(74) Representative: TBK
(86) International application number: PCT/JP2023/040146
(87) International publication number: WO 2024/154415

(57) **Abstract**

A propulsion device (15) includes a propeller (20) and an EPU (50). The EPU (50) includes a motor device (60), an inverter device (80), and an EPU housing (55). The motor device (60) includes a motor (61) and is driven to propel an eVTOL. The inverter device (80) includes an inverter (81) and an inverter control unit (82), and drives the motor device (60). The EPU housing (55) accommodates the motor device (60) and the inverter device (80). In the EPU (50), as the inverter device (80), inverter devices (80A, 80B) are aligned with the motor device (60) in the axial direction (AD). The motor device (60) is driven by the inverter devices (80A, 80B).

## Description

### CROSS REFERENCE TO RELATED APPLICATION

The present application is based on Japanese Patent Applications No. 2023-005266 filed on January 17, 2023 and No. 2023-184834 filed on October 27, 2023. The entire disclosures of all of the above applications are incorporated herein by reference.

### TECHNICAL FIELD

The disclosure of the present description relates to a propulsion device.

### BACKGROUND ART

Patent Literature 1 describes a drive unit mounted on an airplane or the like. The drive unit includes a singular motor device and a singular inverter device. The singular motor device and the singular inverter device are arranged along a rotation axis of a motor.

### PRIOR ART LITERATURE

### PATENT LITERATURE

Patent Literature 1: DE102015218622

### SUMMARY OF INVENTION

However, in Patent Literature 1, since the drive unit includes only the singular inverter device, when an abnormality occurs in the inverter device, there is a concern that driving of the drive unit may be stopped. Therefore, in a flight vehicle on which the drive unit is mounted, safety of the flight vehicle tends to decrease as the abnormality occurs in the inverter device.

An object of the present disclosure is to provide a propulsion device capable of enhancing safety of a flight vehicle and suitable to be mounted on the flight vehicle.

Multiple aspects disclosed in the description adopt different technical means to achieve respective objects. Reference numerals in parentheses in the claims and the section are an example indicating a correspondence relationship with specific means described in an embodiment to be described later as one aspect, and do not limit the technical scope.

In order to achieve the above object, according to an aspect of the disclosure, a propulsion device is configured to propel a flight vehicle by rotation of a propeller. The propulsion device comprises: a motor device including a motor and configured to be driven to propel the flight vehicle; a motor drive device including a power conversion unit configured to convert electric power to be supplied to the motor and drive the motor device; and a device housing accommodating the motor and the power conversion unit. The motor device is configured to be driven by a plurality of motor drive devices. Each of the motor drive devices is configured to drive at least one motor device. The motor drive devices are aligned with the motor device in an axial direction, in which a rotation axis of the motor extends, and aligned with each other in the axial direction.

According to the above aspect, each of the multiple motor drive devices drives at least one motor device. In the configuration, even if an abnormality occurs in one of the motor drive devices, the motor device can be driven by the remaining motor drive devices. Therefore, redundancy of the propulsion device can be enhanced by the multiple motor drive devices.

The multiple motor drive devices are provided to be aligned with the motor device in the axial direction and to be aligned with each other in the axial direction. In the configuration, as an arrangement order of the motor drive devices and the motor device in the axial direction, an arrangement order for reducing a weight of the device housing can be adopted. In this way, weight reduction of the propulsion device is effective for weight reduction of the flight vehicle.

As described above, safety of the flight vehicle can be enhanced by the propulsion device, and further, the propulsion device suitable to be mounted on the flight vehicle can be implemented.

### BRIEF DESCRIPTION OF DRAWINGS

FIG. 1 is a diagram showing a configuration of an eVTOL according to a first embodiment.
FIG. 2 is a schematic cross-sectional view of a propulsion device.
FIG. 3 is a block diagram showing an electrical configuration of an EPU.
FIG. 4 is a schematic perspective diagram of a motor device and an inverter device.
FIG. 5 is a flowchart showing a procedure of a flight control process.
FIG. 6 is a schematic cross-sectional view of the propulsion device according to a second embodiment.
FIG. 7 is a schematic cross-sectional view of the propulsion device according to a third embodiment.
FIG. 8 is a schematic cross-sectional view of the propulsion device according to a fourth embodiment.
FIG. 9 is a schematic cross-sectional view of the propulsion device according to a fifth embodiment.
FIG. 10 is a schematic cross-sectional view of the propulsion device according to a sixth embodiment.
FIG. 11 is a schematic cross-sectional view of the propulsion device according to a seventh embodiment.
FIG. 12 is a block diagram showing an electrical configuration of the EPU.
FIG. 13 is a schematic cross-sectional view of a propulsion device according to an eighth embodiment.
FIG. 14 is a schematic cross-sectional view of a propulsion device according to a ninth embodiment.
FIG. 15 is a schematic cross-sectional view of a propulsion device according to a tenth embodiment.
FIG. 16 is a schematic cross-sectional view of the propulsion device according to an eleventh embodiment.
FIG. 17 is a schematic cross-sectional view of the propulsion device according to a twelfth embodiment.
FIG. 18 is a schematic cross-sectional view of the propulsion device according to a thirteenth embodiment.

### DESCRIPTION OF EMBODIMENTS

Hereinafter, multiple embodiments for carrying out the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only combinations between portions that are specifically clarified as being able to be used in combination in each embodiment are possible, but also partial combinations between the embodiments whose combination is not specifically clarified are possible as long as no adverse effect is particularly generated on the combination.

### First Embodiment

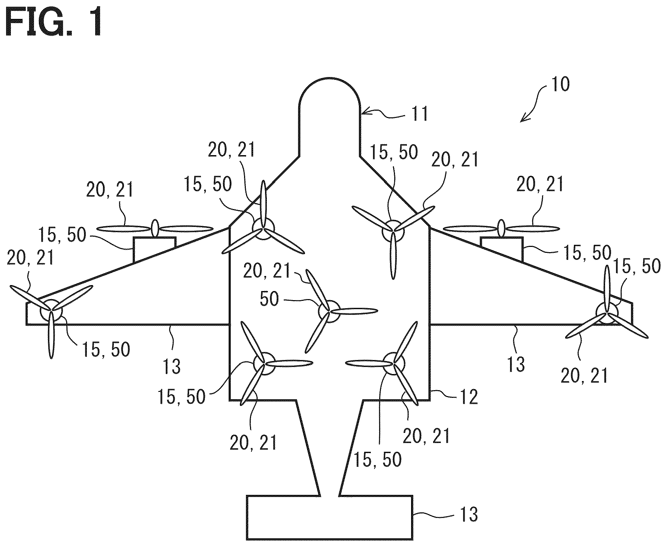

A flight system 30 shown in FIG. 1 is mounted on an eVTOL 10. The eVTOL 10 is an electric vertical take-off and landing aircraft. The electric vertical take-off and landing aircraft is an electric-powered vertical take-off and landing aircraft, and can take off and land vertically. The eVTOL is an abbreviation of an electric vertical take-off and landing aircraft. The eVTOL 10 is an electric-powered flight vehicle that flies through the atmosphere and may be referred to as an electric flight vehicle. The eVTOL 10 is also an electric-powered aircraft and may be referred to as an electric aircraft. The eVTOL 10 may be a manned flight vehicle carrying occupants or an unmanned flight vehicle carrying no occupant. The eVTOL 10 is operated by a pilot as an operator. The pilot may operate the eVTOL 10 as an occupant, or may remotely operate the eVTOL 10 without being on board the eVTOL 10. The flight system 30 is a system that drives the eVTOL 10 to fly. The flight system 30 may be referred to as a propulsion system.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has a passenger compartment for carrying occupants. Each of the wings 13 extends from the airframe main body 12 and multiple wings 13 are provided on the airframe main body 12. The wings 13 are fixed wings. The multiple wings 13 include a main wing, a tail wing, and the like.

Multiple propellers 20 are provided on the airframe 11. The eVTOL 10 is a multicopter including at least three propellers 20. For example, at least four propellers 20 are provided on the airframe 11. The propellers 20 are provided on the airframe main body 12 and the wings 13. Each of the propellers 20 rotates about a propeller axis. The propeller axis is, for example, a center line of the propeller 20. The propeller 20 can generate thrust and lift in the eVTOL 10. The propeller 20 may be referred to as a rotor or a rotary blade.

The propeller 20 includes blades 21. Multiple blades 21 are arranged in a circumferential direction of the propeller axis. In the propeller 20, the multiple blades 21 are coupled by a boss. In the propeller 20, a propeller shaft extends from the boss along the propeller axis. The propeller 20 is a variable pitch propeller. In the propeller 20, an angle of each of the blades 21 with respect to the propeller axis is changable.

Manners in which the eVTOL 10 flies include vertical take-off, vertical landing, cruise, hovering, and the like. The eVTOL 10 can take off from a take-off point by ascending in a vertical direction without sliding, for example, as the vertical take-off. The eVTOL 10 can land at a landing point without sliding by descending in the vertical direction, for example, as the vertical landing.

The multiple propellers 20 include a lift-propeller and a cruise-propeller. The lift-propeller is provided such that the propeller axis extends in an upper-lower direction. The lift-propeller can generate lift in the eVTOL 10. The eVTOL 10 can be ascends, descends, hovering, or the like due to driving rotation of the lift-propeller. The cruise-propeller is provided such that the propeller axis extends in a front-rear direction. The cruise-propeller can generate thrust in the eVTOL 10. The eVTOL 10 can cruise or the like due to driving rotation of the cruise-propeller.

The eVTOL 10 may be a tilt-rotor machine. In the tilt-rotor machine, a tilt angle of the propeller 20 is adjustable. In the tilt-rotor machine, one propeller 20 can function as both the lift-propeller and the cruise-propeller.

The eVTOL 10 includes EPUs 50. Each of the EPUs 50 is a device that is driven to drive and rotate a corresponding one of the propellers 20 and corresponds to a drive device. The EPU is an abbreviation of an electric propulsion unit. The EPU 50 may be referred to as a power drive device or a power drive system. The EPU 50 is provided individually for each of the multiple propellers 20. The EPU 50 is aligned with the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween.

The propeller 20 rotates as the EPU 50 is driven. The propeller 20 corresponds to a rotary body. The eVTOL 10 flies by rotating the propellers 20. That is, the eVTOL 10 moves by rotating the propellers 20. The eVTOL 10 corresponds to a moving object. The eVTOL 10 includes propulsion devices 15. Each of the propulsion devices 15 includes the propeller 20 and the EPU 50. The propulsion device 15 propels the eVTOL 10 by rotating the propeller 20. The propulsion device 15 is a device in which the propeller 20 and the EPU 50 are integrated. Only the EPU 50 among the propeller 20 and the EPU 50 may be referred to as the propulsion device.

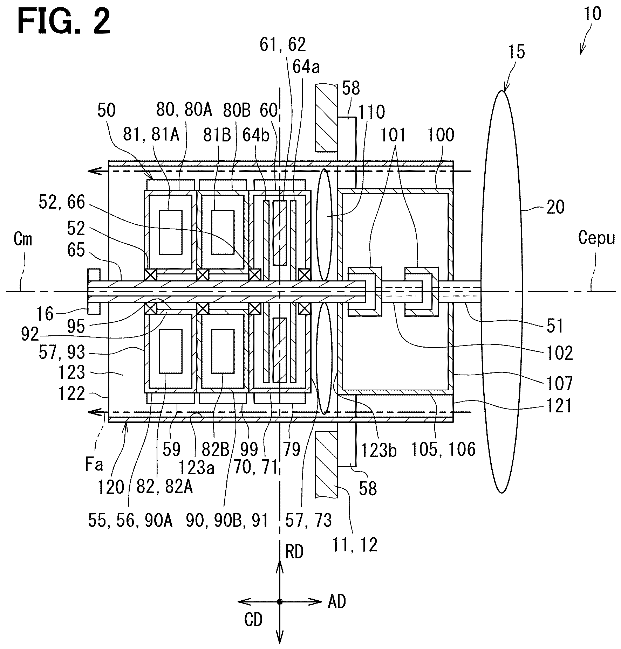

As shown in FIG. 2, the EPU 50 includes a motor device 60 and an inverter device 80. The motor device 60 and the inverter device 80 are formed in a short columnar shape as a whole, and extend in an axial direction AD. The motor device 60 and the inverter device 80 are aligned in the axial direction AD. The motor device 60 and the inverter device 80 overlap each other in the axial direction AD. The motor device 60 and the inverter device 80 are provided coaxially. A center line of the inverter device 80 coincides with a motor axis Cm. The motor device 60 is provided between the inverter device 80 and the propeller 20 in the axial direction AD.

The motor device 60 includes a motor 61 and a motor housing 70. The motor housing 70 is a case and accommodates the motor 61. The motor 61 is a multi-phase AC motor. The motor device 60 is driven to propel the eVTOL 10. The motor device 60 is a flight driving source of the eVTOL 10 and functions as an electric motor. The motor device 60 may be referred to as a rotary electric machine.

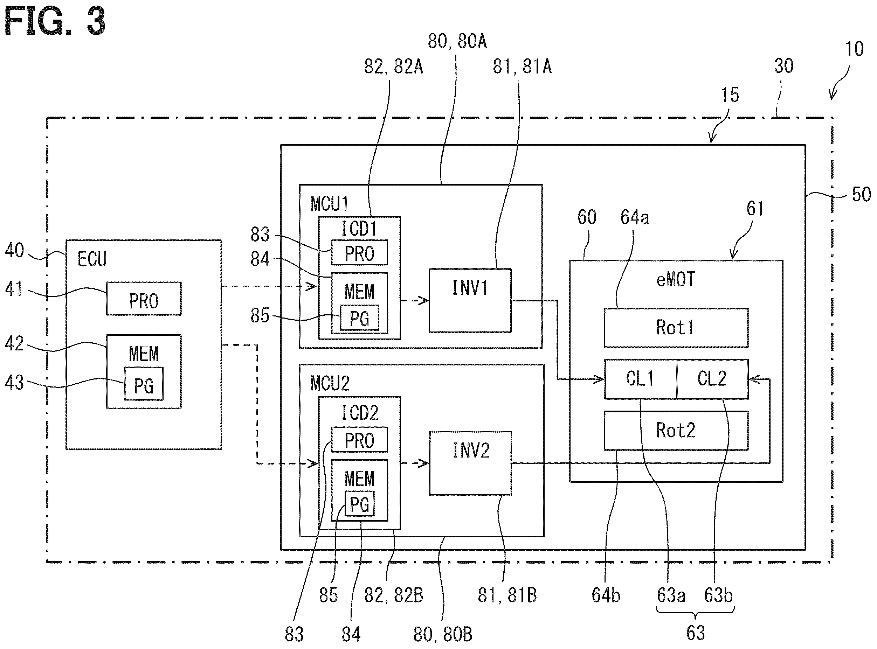

The motor 61 includes a stator 62, rotors 64a and 64b, and a motor shaft 65. The motor 61 includes mechanical components such as the stator 62, the rotors 64a and 64b, and the motor shaft 65. The stator 62 is a stator and is fixed to the motor housing 70. The stator 62 includes a motor coil 63 (see FIG. 3). The motor coil 63 is a multi-phase coil. The motor coil 63 is a winding and forms an armature.

The rotors 64a, 64a are rotors and rotate with respect to the stator 62. The motor shaft 65 supports the rotors 64a and 64b. The motor shaft 65 rotates together with the rotors 64a and 64b. The motor 61 is an axial gap-type motor. In the motor 61, the stator 62 and the rotors 64a and 64b are arranged in the axial direction AD. The motor 61 is a dual-rotor motor. In the motor 61, the first rotor 64a and the second rotor 64b are aligned in the axial direction AD with the stator 62 interposed therebetween.

The axial direction AD is a direction in which the motor axis Cm extends. The motor axis Cm is a rotation axis of each of the rotors 64a and 64b. The rotors 64a and 64b rotate about the motor axis Cm. The motor axis Cm is, for example, a center line of each of the rotors 64a and 64b. The motor axis Cm is also a center line of each of the motor 61, the stator 62, and the motor shaft 65. The motor axis Cm corresponds to a rotation axis. Regarding the motor axis Cm, the axial direction AD, a radial direction RD and a circumferential direction CD are orthogonal to one another. An outer side in the radial direction RD may be referred to as a radially outer side or an outer peripheral side. An inner side in the radial direction RD may be referred to as a radially inner side or an inner peripheral side.

The motor housing 70 includes a motor outer peripheral wall 71, motor facing walls 73, and motor fins 79. Each of the motor outer peripheral wall 71, the motor facing wall 73, and the motor fin 79 is made of a metal material or the like and has a thermal conduction property. The motor outer peripheral wall 71 extends annularly in the circumferential direction CD. The motor outer peripheral wall 71 forms an outer peripheral surface of the motor housing 70. The motor outer peripheral wall 71 covers the stator 62 and the rotors 64a and 64b from the outer peripheral side. A pair of motor facing walls 73 are arranged in the axial direction AD. The pair of motor facing walls 73 face each other with the stator 62, the rotors 64a and 64b, and the motor outer peripheral wall 71 interposed therebetween. Each of the motor facing walls 73 extends in a direction orthogonal to the axial direction AD. The motor facing walls 73 are fixed to the motor outer peripheral wall 71.

The motor fins 79 are provided on the motor outer peripheral wall 71. The motor fins 79 release heat of the motor housing 70 to the outside of the motor device 60. The motor fins 79 are heat dissipation fins extending from the motor outer peripheral wall 71 toward the outer peripheral side. The motor fins 79 extend in a direction orthogonal to the circumferential direction CD. Multiple motor fins 79 are arranged in the circumferential direction CD.

The motor device 60 includes motor bearings 66. The motor bearings 66 rotatably support the motor shaft 65. Each of the motor bearings 66 is a bearing member. Multiple motor bearings 66 are arranged in the axial direction AD. The motor bearings 66 are fixed to the motor housing 70. For example, the motor bearings 66 are fixed to the motor facing walls 73.

The inverter device 80 drives the motor device 60. The inverter device 80 corresponds to a motor drive device. The inverter device 80 includes an inverter 81, an inverter control unit 82, and an inverter housing 90. The inverter housing 90 is a case, and accommodates the inverter 81 and the inverter control unit 82. The inverter 81 drives the motor 61 by converting electric power supplied to the motor 61. The inverter 81 corresponds to a power conversion unit.

The inverter 81 includes multiple electronic components such as a switching element and a capacitor element. In the inverter 81, these electronic components are mounted on a circuit board or the like. The inverter control unit 82 controls the motor 61 by controlling the inverter 81. The inverter control unit 82 includes a microcomputer and multiple electronic components such as a processor 83 and a memory 84 which are to be described later. In the inverter control unit 82, these electronic components are mounted on a circuit board or the like. The inverter device 80 controls electric power to be supplied to the motor coil 63. In the inverter device 80, one inverter 81 and one inverter control unit 82 form one inverter module. The inverter 81 and the inverter control unit 82 may include a common circuit board.

The inverter housing 90 has an inverter housing hole 95. The inverter housing hole 95 penetrates the inverter housing 90 in the axial direction AD. The inverter housing hole 95 extends in the axial direction AD along the motor axis Cm. The inverter housing hole 95 is provided at a center of the inverter housing 90. A center line of the inverter housing hole 95 coincides with the motor axis Cm. The inverter housing 90 corresponds to a motor drive housing.

The inverter housing 90 includes an inverter outer peripheral wall 91, an inverter inner peripheral wall 92, inverter facing walls 93, and inverter fins 99. Each of the inverter outer peripheral wall 91, the inverter inner peripheral wall 92, the inverter facing wall 93, and the inverter fin 99 is made of a metal material or the like and has a thermal conduction property.

The inverter outer peripheral wall 91 and the inverter inner peripheral wall 92 extend annularly in the circumferential direction CD. The inverter outer peripheral wall 91 forms an outer peripheral surface of the inverter housing 90. The inverter inner peripheral wall 92 forms an inner peripheral surface of the inverter housing 90. The inverter inner peripheral wall 92 is provided with the inverter housing hole 95. The inverter outer peripheral wall 91 and the inverter inner peripheral wall 92 are aligned in the radial direction RD and face each other with the inverter 81 and the inverter control unit 82 interposed therebetween.

A pair of inverter facing walls 93 are arranged in the axial direction AD. The pair of inverter facing walls 93 face each other with the inverter 81, the inverter control unit 82, the inverter outer peripheral wall 91, and the inverter inner peripheral wall 92 interposed therebetween. Each of the inverter facing walls 93 extends in a direction orthogonal to the axial direction AD. The inverter facing walls 93 are fixed to the inverter outer peripheral wall 91 and the inverter inner peripheral wall 92.

The inverter fins 99 are provided on the inverter outer peripheral wall 91. The inverter fins 99 release heat of the inverter housing 90 to the outside of the inverter device 80. The inverter fins 99 are heat dissipation fins extending from the inverter outer peripheral wall 91 toward the outer peripheral side. The inverter fins 99 extend in a direction orthogonal to the circumferential direction CD. Multiple inverter fins 99 are arranged in the circumferential direction CD.

The motor device 60 and the inverter device 80 are fixed to each other. For example, the motor housing 70 and the inverter housing 90 are fixed by fixing tools such as bolts. The fixing tools fix the motor outer peripheral wall 71 and the inverter outer peripheral wall 91. The motor outer peripheral wall 71 and the inverter outer peripheral wall 91 are aligned in the axial direction AD. For example, the motor outer peripheral wall 71 and the inverter outer peripheral wall 91 are aligned in the axial direction AD such that respective outer peripheral surfaces are flush with each other.

The EPU 50 includes a gear device 100. The gear device 100 mechanically connects the motor device 60 and the propeller 20. The gear device 100 transmits the driving of the motor device 60 to the propeller 20. The gear device 100 is provided between the motor device 60 and the propeller 20 in the axial direction AD. The gear device 100 may be referred to as a gear box. The gear device 100 is formed in a short columnar shape as a whole, and extends in the axial direction AD. The gear device 100 is aligned with the motor device 60 and the inverter device 80 in the axial direction AD. The gear device 100 is provided between the motor device 60 and the propeller 20 and between the inverter device 80 and the propeller 20 in the axial direction AD. The gear device 100 is provided coaxially with the motor device 60 and the inverter device 80. A center line of the gear device 100 coincides with the motor axis Cm.

The gear device 100 includes a gear 101, a gear shaft 102, and a gear housing 105. The gear shaft 102 extends in the axial direction AD and connects the motor shaft 65 and the propeller 20. The gear 101 includes a speed reducer and is provided on the gear shaft 102.

The gear housing 105 accommodates the gear 101. The gear housing 105 includes a gear outer peripheral wall 106 and gear facing walls 107. The gear outer peripheral wall 106 extends annularly in the circumferential direction CD. The gear outer peripheral wall 106 forms an outer peripheral surface of the gear housing 105. The gear outer peripheral wall 106 covers the gear 101 from the radially outer side. A pair of gear facing walls 107 are arranged in the axial direction AD. The pair of gear facing walls 107 are arranged in the axial direction AD with the gear 101 interposed therebetween. Each of the gear outer peripheral wall 106 and the gear facing wall 107 is made of a metal material or the like and has a thermal conduction property.

The EPU 50 includes an EPU shaft 51, EPU bearings 52, and an EPU housing 55. The EPU housing 55 is a case and accommodates the motor 61, the inverter 81, the inverter control unit 82, and the gear 101. The EPU housing 55 corresponds to a device housing. The EPU housing 55 includes the motor housing 70, the inverter housing 90, and the gear housing 105.

The EPU housing 55 includes an EPU outer peripheral wall 56, EPU facing walls 57, and EPU fins 59. The EPU outer peripheral wall 56 extends annularly in the circumferential direction CD. The EPU outer peripheral wall 56 forms an outer peripheral surface of the EPU housing 55. The EPU outer peripheral wall 56 includes the motor outer peripheral wall 71, the inverter outer peripheral wall 91, and the gear outer peripheral wall 106. Multiple EPU facing walls 57 are aligned in the axial direction AD. The EPU facing walls 57 includes the motor facing walls 73, the inverter facing walls 93, and the gear facing walls 107. Each of the EPU facing walls 57 extends in a direction orthogonal to the axial direction AD. The EPU facing walls 57 are fixed to the EPU outer peripheral wall 56. The EPU facing walls 57 form end surfaces among outer surfaces of the EPU housing 55.

The EPU shaft 51 connects the rotors 64a and 64b and the propeller 20. The EPU shaft 51 includes the motor shaft 65 and the gear shaft 102. The EPU shaft 51 extends in the axial direction AD along the motor axis Cm and rotates about the motor axis Cm. The EPU shaft 51 penetrates the EPU housing 55 in the axial direction AD. For example, the EPU shaft 51 is inserted in the inverter housing hole 95.

The EPU bearings 52 rotatably support the EPU shaft 51. Each of the EPU bearings 52 is a bearing member. Multiple EPU bearings 52 are arranged in the axial direction AD. The EPU bearings 52 are fixed to the EPU housing 55. The EPU bearings 52 are fixed to the motor housing 70 and the inverter housing 90. The multiple EPU bearings 52 include the motor bearings 66.

The EPU fins 59 are provided on the EPU outer peripheral wall 56. The EPU fins 59 release heat of the EPU housing 55 to the outside of the EPU 50. The EPU fins 59 are heat dissipation fins extending from the EPU outer peripheral wall 56 toward the outer peripheral side. The EPU fins 59 extend in a direction orthogonal to the circumferential direction CD. Multiple EPU fins 59 are arranged in the circumferential direction CD. The multiple EPU fins 59 include the motor fins 79 and the inverter fins 99. The EPU fins 59 may be provided on the EPU facing wall 57 or the inverter inner peripheral wall 92.

The propulsion device 15 includes a pitch controller 16. The pitch controller 16 is provided on the EPU shaft 51. The pitch controller 16 can change a pitch of the propeller 20. For example, the pitch controller 16 allows the propeller 20 to rotate such that the angle of the blade 21 with respect to the propeller axis changes. The pitch controller 16 includes an actuator such as a motor.

In the propulsion device 15, propeller wind is generated as the propeller 20 rotates. The propeller wind is a flow of gas such as air flowing in the axial direction AD. The propeller wind flows from the propeller 20 toward the EPU 50. The EPU 50 is provided on a downwind side of the propeller wind with respect to the propeller 20.

The EPU 50 includes an EPU fan 110 and an EPU duct 120. The EPU fan 110 can cause air to flow in the axial direction AD in order to cool the EPU housing 55. The EPU fan 110 blows air such that cooling air Fa flows in the axial direction AD. The cooling air Fa flows in the same direction as the propeller wind. The cooling air Fa is a flow of gas such as air flowing in the axial direction AD. The cooling air Fa is generated as at least the propeller 20 and the EPU fan 110 of the EPU fan 110 rotate. The EPU fan 110 is provided on the downwind side of the cooling air Fa with respect to the propeller 20. The EPU fan 110 is, for example, an axial fan and corresponds to an air cooling fan. The EPU fan 110 is provided on the EPU shaft 51. The EPU fan 110 rotates together with the EPU shaft 51 as the motor device 60 is driven.

The EPU duct 120 extends annularly in the circumferential direction CD. The EPU duct 120 extends in the axial direction AD. The EPU duct 120 accommodates the motor device 60, the inverter device 80, and the gear device 100. The EPU duct 120 accommodates the EPU housing 55. The EPU duct 120 is provided to cover the EPU housing 55 from the outer peripheral side. The EPU duct 120 is made of a metal material or the like and has a thermal conduction property.

The EPU fan 110 is accommodated in the EPU duct 120. In the EPU duct 120, the cooling air Fa flows as the EPU fan 110 rotates. In the EPU duct 120, the cooling air Fa flowing in from a first duct port 121 flows out from a second duct port 122. The first duct port 121 is an opening on a propeller 20 side among a pair of openings of the EPU duct 120. The second duct port 122 is an opening opposite to the propeller 20. The first duct port 121 and the second duct port 122 are arranged in the axial direction AD with a duct space 123 interposed therebetween. The duct space 123 is an internal space of the EPU duct 120.

The EPU duct 120 includes an outer peripheral flow path 123a and an interposed flow path 123b. The outer peripheral flow path 123a and the interposed flow path 123b are in the duct space 123. The outer peripheral flow path 123a is formed between the EPU housing 55 and the EPU duct 120 in the radial direction RD. The outer peripheral flow path 123a is a flow path extending annularly in the circumferential direction CD. The outer peripheral flow path 123a extends in the axial direction AD along the outer peripheral surface of the EPU housing 55. The outer peripheral flow path 123a extends in the axial direction AD to span the first duct port 121 and the second duct port 122. The outer peripheral flow path 123a is provided with the motor fins 79 and the inverter fins 99 as the EPU fins 59. The outer peripheral flow path 123a is formed between the EPU duct 120 and the EPU housing 55. The EPU duct 120 corresponds to an outer peripheral duct.

The EPU housing 55 is divided into multiple housing portions. For example, the EPU housing 55 includes two housing portions. The two housing portions are aligned in the axial direction AD. One of the two housing portions is formed by the gear housing 105, and the other is formed by the motor housing 70 and the inverter housing 90. In the EPU housing 55, the gear housing 105 and the motor housing 70 are located at positions away from each other in the axial direction AD. The gear housing 105 and the motor housing 70 are coupled to each other by a coupling member which is not shown.

The interposed flow path 123b is a flow path formed between the two housing portions in the axial direction AD. For example, the interposed flow path 123b is located between the gear housing 105 and the motor housing 70 in the axial direction AD. The interposed flow path 123b extends from the outer peripheral flow path 123a toward the radially inner side. The gear housing 105 and the motor housing 70 are located adjacent to each other in the axial direction AD with the interposed flow path 123b interposed therebetween.

The EPU fan 110 is provided on the interposed flow path 123b. The EPU fan 110 is located between two housing portions adjacent to each other in the axial direction AD. For example, the EPU fan 110 is located between the gear housing 105 and the motor housing 70. The EPU fan 110 is provided upwind of the motor housing 70 and the inverter housing 90. That is, the EPU fan 110 is provided between the motor device 60 and the propeller 20 and between the inverter device 80 and the propeller 20 in the axial direction AD.

In the outer peripheral flow path 123a, the cooling air Fa flows in the axial direction AD as the EPU fan 110 rotates. The cooling air Fa flows into the outer peripheral flow path 123a from the first duct port 121 and out to the outside from the second duct port 122. The cooling air Fa is sucked by the EPU fan 110 and flows into the outer peripheral flow path 123a from the first duct port 121. The cooling air Fa is pushed out by the EPU fan 110 and flows out from the second duct port 122 to the outside.

The EPU 50 includes EPU fixing portions 58. Each of the EPU fixing portions 58 is a portion that fixes the EPU 50 to the airframe 11. The EPU fixing portions 58 are fixed to the airframe 11 by fixing tools such as bolts. The EPU fixing portions 58 are included in the EPU housing 55. The EPU fixing portions 58 correspond to a housing fixing portion. The EPU fixing portions 58 are provided on the EPU outer peripheral wall 56. Each of the EPU fixing portions 58 is a projection portion provided on an outer peripheral surface of the EPU outer peripheral wall 56. The EPU fixing portion 58 penetrates the EPU duct 120 and projects toward the outer peripheral side of the EPU duct 120. Multiple EPU fixing portions 58 are arranged in the circumferential direction CD. The EPU fixing portions 58 may extend annularly in the circumferential direction CD.

The EPU fixing portion 58 is provided between the propeller 20 and the inverter device 80 in the axial direction AD. For example, the EPU fixing portion 58 is provided between the propeller 20 and the motor device 60 in the axial direction AD. The EPU fixing portion 58 is provided at a position closer to the motor device 60 than to the inverter device 80. In the axial direction AD, a distance between the EPU fixing portion 58 and the motor device 60 is smaller than a distance between the EPU fixing portion 58 and the inverter device 80.

The EPU fixing portion 58 is provided at a portion of the EPU housing 55 having a high strength. In the EPU housing 55, multiple portions having different strengths are arranged in the axial direction AD. In the EPU housing 55, the gear housing 105, the motor housing 70, and the inverter housing 90 have different strengths. For example, the strength of the gear housing 105 is higher than the strength of the inverter housing 90. The gear housing 105 corresponds to a high-strength housing. The strength of the inverter housing 90 is lower than the strength of the motor housing 70. One of the gear housing 105 and the motor housing 70 may have a higher strength than the other, or one of the gear housing 105 and the motor housing 70 may have the same strength as the other.

In the EPU 50, the strength of the EPU housing 55 tends to increase as a strength of the EPU outer peripheral wall 56 increases. The EPU fixing portion 58 is provided at a portion of the EPU outer peripheral wall 56 having a high strength. In the EPU outer peripheral wall 56, multiple portions having different strengths are arranged in the axial direction AD. In the EPU outer peripheral wall 56, the gear outer peripheral wall 106, the motor outer peripheral wall 71, and the inverter outer peripheral wall 91 have different strengths. For example, the strength of the gear outer peripheral wall 106 is higher than the strength of the inverter outer peripheral wall 91. The strength of the inverter outer peripheral wall 91 is lower than the strength of the motor outer peripheral wall 71. One of the gear outer peripheral wall 106 and the motor outer peripheral wall 71 may have a higher strength than the other, or one of the gear outer peripheral wall 106 and the motor outer peripheral wall 71 may have the same strength as the other.

The strength of the EPU outer peripheral wall 56 tends to increase as a thickness dimension in the radial direction RD increases. In the EPU housing 55, the strength of the EPU outer peripheral wall 56 increases as the EPU outer peripheral wall 56 increases in thickness. In the EPU outer peripheral wall 56, the gear outer peripheral wall 106, the motor outer peripheral wall 71, and the inverter outer peripheral wall 91 have different thicknesses. For example, a thickness dimension of the gear outer peripheral wall 106 is larger than a thickness dimension of the inverter outer peripheral wall 91. The thickness dimension of the inverter outer peripheral wall 91 is smaller than a thickness dimension of the motor outer peripheral wall 71. One of the gear outer peripheral wall 106 and the motor outer peripheral wall 71 may have a larger thickness dimension than the other, or one of the gear outer peripheral wall 106 and the motor outer peripheral wall 71 may have the same thickness dimension as the other. In FIG. 2, for convenience of illustration, the gear outer peripheral wall 106, the motor outer peripheral wall 71, and the inverter outer peripheral wall 91 have substantially the same thickness.

In the EPU 50, the motor 61 and the gear 101 are relatively heavy. For example, a weight of the motor 61 and a weight of the gear 101 are larger than weights of the inverter 81 and the inverter control unit 82. In the EPU housing 55, for example, the strength of the motor housing 70 is higher than the strength of the inverter housing 90 such that the strength of the motor housing 70 is not insufficient with respect to the weight of the motor 61. In the EPU housing 55, for example, the strength of the gear housing 105 is higher than the strength of the inverter housing 90 such that the strength of the gear housing 105 is not insufficient with respect to the weight of the gear 101.

In the EPU housing 55, the inverter 81 and the inverter control unit 82 are relatively light in weight. Therefore, even if the strength of the inverter housing 90 is lower than the strength of the motor housing 70 and the strength of the gear housing 105, the strength of the inverter housing 90 is less likely to be insufficient with respect to the weights of the inverter 81 and the inverter control unit 82.

The EPU fixing portions 58 are included in the gear housing 105. The EPU fixing portions 58 are provided on the gear outer peripheral wall 106. The EPU fixing portion 58 is provided at a position closer to an end portion of the gear outer peripheral wall 106 on a motor device 60 side than to an end portion on a propeller 20 side. For example, the EPU fixing portion 58 is provided on the end portion of the gear outer peripheral wall 106 on the motor device 60 side.

As shown in FIG. 3, the eVTOL 10 includes an integrated control unit 40. The integrated control unit 40 performs flight control for causing the eVTOL 10 to fly. The integrated control unit 40 integrally controls various devices such as the EPU 50 mounted on the eVTOL 10. The flight control includes EPU control for driving the EPU 50. The EPU control includes motor control for driving the motor 61. The integrated control unit 40 is a flight control device. The integrated control unit 40 controls driving of the pitch controller 16. The integrated control unit 40 adjusts the pitch of the propeller 20 via the pitch controller 16.

The integrated control unit 40 is, for example, an ECU. The ECU is an abbreviation of an electronic control unit. The integrated control unit 40 includes a processor 41, a memory 42, and a program 43. The integrated control unit 40 is mainly implemented by a computer. The computer includes the processor 41, the memory 42, an input/output interface, and a bus connecting these components. The memory 42 stores the program 43. The program 43 is a program for performing the flight control.

The processor 41 is hardware for performing an arithmetic process coupled to the memory 42. The processor 41 executes various processes such as a flight control process by accessing the memory 42. The memory 42 is a storage medium that stores the control program and the like. For example, the memory 42 is a non-transitory tangible storage medium that non-temporarily stores computer readable programs and data. The non-transitory tangible storage medium is a non-transitory tangible storage medium, and is implemented by a semi-conductor memory, a magnetic disk, or the like. The program 43 includes computer-readable instructions that cause the processor 41 to execute various functions. The processor 41 is a processing unit that executes a predetermined process by executing the instructions in the program 43.

The integrated control unit 40 is communicably connected to the inverter control unit 82. The integrated control unit 40 performs the flight control according to detection results of various sensors and the like. The flight control includes propulsion control for driving the propulsion device 15. The propulsion control includes the EPU control for driving the EPU 50, and the motor control for driving the motor 61. The integrated control unit 40 outputs a command signal or the like to the inverter control unit 82.

The inverter control unit 82 performs the motor control for driving the motor device 60. The inverter control unit 82 controls the electric power to be supplied from the inverter 81 to the motor coil 63 as the motor control. For example, in the motor control, energization of the motor coil 63 is controlled. The inverter control unit 82 performs the motor control in response to a command signal or the like from the integrated control unit 40.

The inverter control unit 82 is, for example, an ECU. The inverter control unit 82 includes a processor 83, a memory 84, and a program 85. The inverter control unit 82 is mainly implemented by a computer. The computer includes a processor 83, a memory 84, an input/output interface, a bus connecting these components, and the like. The memory 84 stores the program 85. The program 85 is a program for performing the flight control.

The processor 83 is hardware for performing an arithmetic process coupled to the memory 84. The processor 83 executes various processes such as the flight control process by accessing the memory 84. The memory 84 is a storage medium that stores the control program and the like. For example, the memory 84 is a non-transitory tangible storage medium that non-temporarily stores computer readable programs and data. The program 85 includes computer-readable instructions that cause the processor 83 to execute various functions. The processor 83 is a processing unit that executes predetermined processing by executing instructions included in the program 85.

The motor coil 63 includes multiple individual coils. The individual coils are multi-phase coils. The individual coil is an n-phase coil. n is a natural number. The motor coil 63 includes m individual coils. m is a natural number. The motor coil 63 has m individual n-phase coils and is a coil having m × n phases. When the electric power is supplied to the m individual coils, the motor 61 is driven as an m×n-phase motor. The motor 61 can be driven by supplying the electric power to at least one of the individual coils. For example, when the electric power is supplied to one of the individual coils, the motor 61 is driven as a 1×n-phase motor.

In the present embodiment, the motor coil 63 includes two individual coils. Each of the two individual coils is a three-phase coil. Therefore, the motor coil 63 is a six-phase coil and the motor 61 is a six-phase motor. When the electric power is supplied to only one of the coils, the motor coil 63 is a three-phase coil, and the motor 61 is a three-phase motor.

The motor coil 63 includes a first coil 63a and a second coil 63b as the two individual coils. Each of the coils 63a and 63b is a multi-phase coil. Each of the coils 63a and 63b is a three-phase coil. In the motor coil 63, the first coil 63a and the second coil 63b are arranged in the circumferential direction CD. For example, multiple coil portions forming the first coil 63a and multiple coil portions forming the second coil 63b are alternately arranged in the circumferential direction CD.

The EPU 50 includes a first inverter device 80A and a second inverter device 80B as the inverter device 80. The first inverter device 80A includes a first inverter 81A as the inverter 81 and a first inverter control unit 82A as the inverter control unit 82. The second inverter device 80B includes a second inverter 81B as the inverter 81 and a second inverter control unit 82B as the inverter control unit 82. The first inverter control unit 82A controls the electric power to be supplied to the first coil 63a as the motor control. The second inverter control unit 82B controls the electric power to be supplied to the second coil 63b as the motor control.

In the EPU 50, when both the first inverter control unit 82A and the second inverter control unit 82B perform the motor control, the motor 61 is six-phase driven. In the six-phase driving, the motor 61 is driven as a six-phase motor. In the EPU 50, when only one of the first inverter control unit 82A and the second inverter control unit 82B performs the motor control, the motor 61 is three-phase driven. In the three-phase driving, the motor 61 is driven as a three-phase motor. The integrated control unit 40 can switch between the six-phase driving and the three-phase driving of the motor 61 by controlling the inverter control units 82A and 82B.

In FIG. 3, the propeller 20 is PP, and the gear device 100 is Gear. The integrated control unit 40 is illustrated as an ECU, the processor 41 is illustrated as PRO, the memory 42 is illustrated as MEM, and the program 43 is illustrated as PG. The motor device 60 is illustrated as eMOT, the first coil 63a is illustrated as CL1, the second coil 63b is illustrated as CL2, the first rotor 64a is illustrated as Rot1, and the second rotor 64b is illustrated as Rot2. The first inverter device 80A is illustrated as MCU1, the first inverter 81A is illustrated as INV1, and the first inverter control unit 82A is illustrated as ICD1. The second inverter device 80B is illustrated as MCU2, the second inverter 81B is illustrated as INV2, and the second inverter control unit 82B is illustrated as ICD2. In the inverter control units 82A and 82B, the processor 83 is illustrated as PRO, the memory 84 is illustrated as MEM, and the program 85 is illustrated as PG.

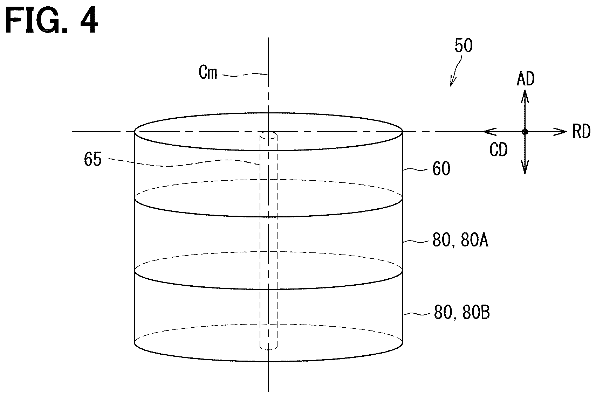

As shown in FIGS. 2 and 4, the inverter devices 80A and 80B are provided opposite to the propeller 20 with the motor device 60 interposed therebetween. The first inverter device 80A and the second inverter device 80B are aligned in the axial direction AD. The first inverter device 80A and the second inverter device 80B are provided at positions adjacent to each other without the motor device 60 interposed therebetween. The first inverter device 80A and the second inverter device 80B overlap each other. The first inverter device 80A and the second inverter device 80B are provided coaxially.

The first inverter device 80A and the second inverter device 80B are fixed to each other. The first inverter device 80A includes a first inverter housing 90A as the inverter housing 90. The second inverter device 80B includes a second inverter housing 90B as the inverter housing 90. The first inverter housing 90A and the second inverter housing 90B overlap each other in the axial direction AD.

In the first inverter housing 90A and the second inverter housing 90B, the respective inverter facing walls 93 overlap each other. The inverter-facing walls 93 are provided at boundary portions between the first inverter housing 90A and the second inverter housing 90B. The inverter facing walls 93 separates an internal space of the first inverter housing 90A and an internal space of the second inverter housing 90B. The inverter facing walls 93 are located between the first inverter 81A and the second inverter 81B and between the first inverter control unit 82A and the second inverter control unit 82B.

The first inverter housing 90A and the second inverter housing 90B are fixed by fixing tools such as bolts. The fixing tools fix the inverter outer peripheral wall 91 of each of the first inverter housing 90A and the second inverter housing 90B. These inverter outer peripheral walls 91 are aligned in the axial direction AD. For example, the outer peripheral surfaces of the inverter outer peripheral walls 91 are aligned in the axial direction AD so as to be flush with each other. The first inverter housing 90A and the second inverter housing 90B correspond to a motor drive housing.

One of the first inverter device 80A and the second inverter device 80B is provided between the other and the motor device 60. For example, the second inverter device 80B is provided between the first inverter device 80A and the motor device 60. The second inverter device 80B and the motor device 60 are fixed to each other. The second inverter housing 90B and the motor housing 70 are fixed by fixing tools such as bolts. The first inverter device 80A is provided at a position away from the second duct port 122 toward the second inverter device 80B.

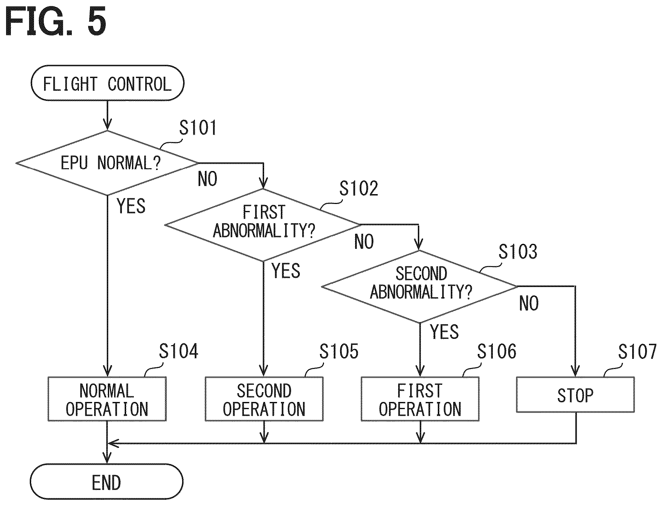

The integrated control unit 40 performs the flight control process for the flight control. The flight control process will be described with reference to a flowchart of FIG. 5. The integrated control unit 40 repeatedly performs the flight control process at a predetermined control cycle. The integrated control unit 40 has a function of performing processing in each step of the flight control process.

In step S101, the integrated control unit 40 determines whether the EPU 50 is normal using detection results of various sensors and the like. When the EPU 50 is normal, the integrated control unit 40 proceeds to step S104 and performs a normal operation process. The normal operation process is a process for driving the motor 61 as a six-phase motor. The integrated control unit 40 controls the inverter control units 82A and 82B such that both of the inverter control units 82A and 82B perform the motor control. In the normal operation process, a performance of the motor device 60 is exhibited to the maximum by six-phase driving the motor 61.

When the EPU 50 is not normal, the integrated control unit 40 determines that an abnormality occurs in the EPU 50, and proceeds to step S102. In step S102, the integrated control unit 40 determines whether a first abnormality occurs in the EPU 50, using the detection results of various sensors and the like. When the first abnormality occurs, an abnormality related to the first coil 63a occurs, but no abnormality related to the second coil 63b occurs.

Examples of the abnormality related to the first coil 63a include an abnormality of the first coil 63a and an abnormality of the first inverter device 80A. Examples of the case where an abnormality occurs in the first coil 63a include a case where a temperature, a current, a voltage, or the like of the first coil 63a deviates from an allowable range. Examples of the case where an abnormality occurs in the first inverter device 80A include a case where a temperature of the first inverter 81A or the first inverter control unit 82A deviates from an allowable range, and a case where a current or a voltage of the first inverter 81A deviates from an allowable range.

Examples of the abnormality related to the second coil 63b include an abnormality of the second coil 63b and an abnormality of the second inverter device 80B. Examples of the case where an abnormality occurs in the second coil 63b include a case where a temperature, a current, a voltage, or the like of the second coil 63b deviates from an allowable range. Examples of the case where an abnormality occurs in the second inverter device 80B include a case where a temperature of the second inverter 81B or the second inverter control unit 82B deviates from an allowable range, and a case where a current or a voltage of the second inverter 81B deviates from an allowable range.

When the first abnormality occurs in the EPU 50, the integrated control unit 40 proceeds to step S105. In step S105, the integrated control unit 40 performs a second operation process. The second operation process is a process for driving the motor 61 as a three-phase motor. In the second operation process, the motor 61 is driven as a three-phase motor by the second coil 63b. The integrated control unit 40 performs power supply to the second coil 63b which is based on the second inverter device 80B, and stops power supply to the first coil 63a which is based on the first inverter device 80A.

When the abnormality of the EPU 50 is not the first abnormality, the integrated control unit 40 proceeds to step S103. In step S103, the integrated control unit 40 determines whether a second abnormality occurs in the EPU 50, using the detection signals of various sensors and the like. When the second abnormality occurs, an abnormality related to the second coil 63b occurs, but no abnormality related to the first coil 63a occurs.

When the second abnormality occurs in the EPU 50, the integrated control unit 40 proceeds to step S106. In step S106, the integrated control unit 40 performs a first operation process. The first operation process is a process for driving the motor 61 as a three-phase motor. In the first operation process, the motor 61 is driven as a three-phase motor by the first coil 63a. The integrated control unit 40 performs the power supply to the first coil 63a which is based on the first inverter device 80A, and stops the power supply to the second coil 63b which is based on the second inverter device 80B.

When the abnormality of the EPU 50 is neither the first abnormality nor the second abnormality, the integrated control unit 40 determines that both the abnormality related to the first coil 63a and the abnormality related to the second coil 63b occurs, and proceeds to step S107. The integrated control unit 40 performs a stop process in step S107. The stop process is a process for stopping the driving of the motor 61. In the stop process, the power supply to the first coil 63a based on the first inverter device 80A is stopped, and the power supply to the second coil 63b based on the second inverter device 80B is stopped.

According to the present embodiment described above, each of the multiple inverter devices 80 drives the motor device 60. In the configuration, even if an abnormality occurs in one inverter device 80, the motor device 60 can be driven by the remaining inverter device 80. Therefore, redundancy of the propulsion device 15 can be enhanced by the multiple inverter devices 80. For example, even if an abnormality occurs in one of the first inverter device 80A and the second inverter device 80B, the motor device 60 can be driven by the other. Therefore, the redundancy of the propulsion device 15 can be enhanced by the first inverter device 80A and the second inverter device 80B. As described above, even if an abnormality occurs in any of the multiple inverter devices 80, a situation in which the driving of the motor device 60 is stopped can be avoided.

The multiple inverter devices 80 are provided to be aligned with the motor device 60 in the axial direction AD and aligned with each other in the axial direction AD. In the configuration, as an arrangement order of the inverter devices 80 and the motor device 60 in the axial direction AD, an arrangement order for reducing a weight of the EPU housing 55 can be adopted. The weight reduction of the EPU 50 is effective for weight reduction of the eVTOL 10.

As described above, safety of the eVTOL 10 can be enhanced by the EPU 50, and further, the EPU 50 suitable to be mounted on the eVTOL 10 can be implemented.

In an aviation-EPU 50 which requires high safety, it is required to ensure redundancy. By providing multiple inverter devices 80 for one EPU 50, redundancy can be ensured, but an increase in weight tends to be a problem.

Meanwhile, in the present embodiment, the motor device 60 and the multiple inverter devices 80 are arranged coaxially. Therefore, the motor device 60 and the multiple inverter devices 80 can be compactly integrated. Therefore, an increase in weight of the EPU 50 can be limited while ensuring the redundancy. Further, when the motor device 60 and the multiple inverter devices 80 are arranged coaxially, the multiple inverter devices 80 can be compactly integrated and are easily fixed or wired to the eVTOL 10, for example, as compared with a configuration in which the multiple inverter devices 80 are individually arranged. Therefore, the redundancy can be ensured while limiting an increase in total size and weight of the EPU 50.

In the EPU 50, multiple components such as the motor device 60 and the multiple inverter devices 80 are arranged coaxially. Therefore, the multiple components can be compactly integrated, and the multiple components are easily fixed or wired to the eVTOL 10. Therefore, the increase in total size and weight of the EPU 50 including the multiple components can be limited, and the redundancy can be further secured by the multiple components.

According to the present embodiment, the multiple inverter devices 80 are arranged adjacent to one motor device 60 in the axial direction AD and adjacent to each other in the axial direction AD without the motor device 60 interposed therebetween. In the configuration, components and devices constituting the inverter device 80 can be shared by the multiple inverter devices 80. In this way, a weight of the inverter device 80 can be reduced by sharing the components and devices by the multiple inverter devices 80. For example, electric wiring that electrically connects the inverter device 80 and the motor device 60 can be shared by the multiple inverter devices 80. Further, at a boundary portion between the two inverter devices 80 adjacent to each other in the axial direction AD, the respective inverter facing walls 93 of the two inverter devices 80 can be shared or not provided. As described above, by arranging the multiple inverter devices 80 adjacent to each other in the axial direction AD, wiring and communication between the inverter devices 80 can be simplified, which contributes to the weight reduction.

According to the present embodiment, at least one of the inverter devices 80 is provided at a position at which a distance between the inverter device 80 and the EPU fixing portion 58 is larger than a distance between the motor device 60 and the EPU fixing portion 58 in the axial direction AD. In the configuration, the inverter device 80 provided at a position farther from the EPU fixing portion 58 than the motor device 60 is does not support the motor device 60. Therefore, since the inverter device 80 does not support the motor device 60, the strength of the inverter housing 90 can be reduced as compared with the strength of the motor housing 70. As described above, the inverter device 80 that does not support the motor device 60 can be reduced in weight by an amount corresponding to the strength of the inverter housing 90 can be reduced.

According to the present embodiment, the motor device 60 is provided at a position at which the distance between the motor device 60 and the EPU fixing portion 58 is smaller than the distance between the inverter device 80 and the EPU fixing portion 58 in the axial direction AD. In the configuration, the motor device 60 supports the inverter device 80 while being fixed to the airframe 11 via the EPU fixing portions 58. Therefore, the inverter device 80 does not need to support the motor device 60. That is, it is not necessary to apply a strength to the inverter housing 90 to support the motor device 60. Since the inverter housing 90 does not need to support the motor device 60, the inverter device 80 can be reduced in weight.

According to the present embodiment, in the EPU housing 55, the motor housing 70 accommodates the motor 61, and the inverter housing 90 accommodates the inverter 81. In the configuration, in the EPU housing 55, the strength can be individually set for the motor housing 70 of the motor device 60 and the inverter housing 90 of the inverter device 80. Therefore, it is possible to secure the strength of the motor housing 70 so as not to be insufficient for the weight of the motor 61 and the like, and to reduce the strength of the inverter housing 90 as much as possible in order to achieve the weight reduction.

According to the present embodiment, the strength of the inverter housing 90 is lower than the strength of the motor housing 70. In the configuration, strength insufficiency of the EPU housing 55 can be prevented by the strength of the motor housing 70, and the weight reduction of the EPU housing 55 can be achieved by reducing the weight of the inverter housing 90.

According to the present embodiment, the EPU fixing portion 58 is provided on the gear housing 105. Since the strength of the gear housing 105 is higher than the strength of the inverter housing 90, strength insufficiency of the gear housing 105 in terms of the EPU fixing portion 58 supporting the EPU 50 can be prevented.

According to the present embodiment, the motor device 60 can be switched between driving by all of the multiple inverter devices 80 and driving by the remaining inverter devices 80 excluding at least one inverter device 80. In the configuration, for example, when an abnormality occurs in one of the inverter devices 80, the motor device 60 can be driven by the remaining inverter devices 80. For example, when an abnormality occurs in one of the first inverter device 80A and the second inverter device 80B, the motor device 60 can be driven by the other.

In the motor device 60 mainly including mechanical components, an abnormality such as a failure is less likely to occur than in the inverter device 80 mainly including electronic components. Therefore, one motor device 60 is configured to be controlled by the multiple inverter device 80, and thus the redundancy of the EPU 50 can be achieved. For example, even if an abnormality such as a failure occurs in one of the inverter devices 80, the remaining inverter devices 80 can control the motor device 60. In the configuration, for example, as compared with a configuration in which two sets each including one motor device 60 and one inverter device 80 are provided, the number of motor devices 60 is one, and the thus weight reduction can be achieved. Therefore, since the number of motor devices 60 is small, the increase in weight can be limited, and the redundancy can be achieved even if the number of motor devices 60 is small.

According to the present embodiment, the motor device 60 can be switched between m×n-phase driving by the multiple inverter devices 80 and n-phase driving by one inverter device 80. In the configuration, when an abnormality occurs in any of the multiple inverter devices 80, the motor device 60 can be n-phase driven by the inverter device 80 in which no abnormality occurs. In this case, by changing a driving mode of the motor device 60, a situation in which the driving of the motor device 60 is stopped can be avoided.

For example, the motor device 60 can be switched between the six-phase driving by both the first inverter device 80A and the second inverter device 80B and the three-phase driving by one of the first inverter device 80A and the second inverter device 80B. In the configuration, when an abnormality occurs in one of the first inverter device 80A and the second inverter device 80B, the motor device 60 can be three-phase driven by the other. In this case, by switching the driving mode of the motor device 60 from the six-phase driving to the three-phase driving, a situation in which the driving of the motor device 60 is stopped can be avoided.

In the present embodiment, since the multiple inverter devices 80 drive the common motor device 60, an output performance per inverter device 80 can be limited. Therefore, the size and weight of one inverter device 80 can be limited. When an abnormality occurs in any of the multiple inverter devices 80, the remaining inverter devices 80 control the motor device 60, and thus an output of the motor device 60 can be prevented from being completely lost even in the event of an abnormality. Accordingly, the multiple inverter devices 80 drive the common motor device 60, and thus the weight reduction and the redundancy can be achieved in a well-balanced manner.

According to the present embodiment, the motor device 60 is provided between the propeller 20 and the inverter device 80 in the axial direction AD. In the configuration, even if a stress is generated as the propeller 20 rotates, the stress is more likely to be applied to the motor device 60 than to the inverter device 80. In the motor device 60, the strength of the motor housing 70 is sufficiently high so as not to be insufficient for the stress applied to the motor device 60. Therefore, even if the stress from the propeller 20 is applied to the motor device 60, the strength of the motor housing 70 is less likely to be insufficient against the stress.

In the configuration, the stress from the propeller 20 is less likely to be applied to the inverter device 80. Therefore, it is not necessary to increase the strength of the inverter housing 90 to avoid to be insufficient for the stress from the propeller 20. Therefore, the weight reduction of the inverter device 80 can be achieved by a positional relationship of the inverter device 80, the propeller 20, and the motor device 60.

In the present embodiment, by connecting the propeller 20 to a motor device 60 side of the EPU 50, the motor device 60 can be disposed at a position at which a strong force generated by the propeller 20 is likely to be applied. Therefore, a strong portion or the EPU fixing portion 58 of the EPU housing 55 can be set closer to the motor device 60 than to the inverter device 80. That is, the strong portion or the EPU fixing portion 58 of the EPU housing 55 can be away from the inverter device 80. Therefore, the weight reduction of the inverter housing 90 and the like of the inverter device 80 can be achieved.

According to the present embodiment, the motor device 60 and the inverter device 80 are aligned with the EPU fan 110 in the axial direction AD. In the configuration, the motor device 60 and the inverter device 80 can be cooled by the cooling air Fa flowing in the axial direction AD as the EPU fan 110 rotates. In the motor device 60 and the inverter device 80, the cooling air Fa can limit a decrease in output of the motor 61 and the inverter 81 caused by heat, or a decrease in output in order to limit heat generation. As described above, since the outputs of the motor device 60 and the inverter device 80 are increased, it is not necessary to excessively increase the output performances of the motor device 60 and the inverter device 80, and it is easy to achieve size reduction and weight reduction.

According to the present embodiment, the EPU fan 110 blows air such that the cooling air Fa passes through the outer peripheral flow path 123a in the axial direction AD. Since the outer peripheral flow path 123a is a flow path formed between the EPU housing 55 and the EPU duct 120, a configuration can be implemented in which the cooling air Fa easily flows along the outer peripheral surface of the EPU housing 55. Therefore, an effect of cooling the motor device 60 and the inverter device 80 by the cooling air Fa can be enhanced.

According to the present embodiment, in the motor 61, the stator 62 and the rotors 64a and 64b are aligned in the axial direction AD. That is, an axial gap-type motor is adopted as the motor 61. Therefore, a height dimension of the motor device 60 in the axial direction AD tends to decrease. For example, the height dimension in the axial direction AD can be reduced as compared with a radial gap-type motor in which a stator and a rotor are aligned in the radial direction RD. Therefore, even if the motor device 60 and the inverter device 80 are aligned in the axial direction AD, a height dimension of the EPU 50 in the axial direction AD is easily decreased. By decreasing the height of the EPU 50 in this manner, the size and weight of the EPU 50 can be limited.

In the present embodiment, the stator 62 is provided between the first rotor 64a and the second rotor 64b. That is, a dual-rotor motor is adopted as the axial gap-type motor 61. The motor 61 is compact in the axial direction AD and can provide a large output. Therefore, the size and weight of the motor device 60 or the EPU 50 can be further limited.

### Second Embodiment

In the first embodiment described above, the EPU fan 110 is provided between the motor device 60 and the propeller 20 and between the inverter device 80 and the propeller 20 in the axial direction AD. Meanwhile, in a second embodiment, the EPU fan 110 is provided opposite to the propeller 20 with the motor device 60 and the inverter device 80 interposed therebetween in the axial direction AD. Configurations, operations, and effects not particularly described in the second embodiment are the same as those in the first embodiment. In the second embodiment, differences from the first embodiment will be mainly described.

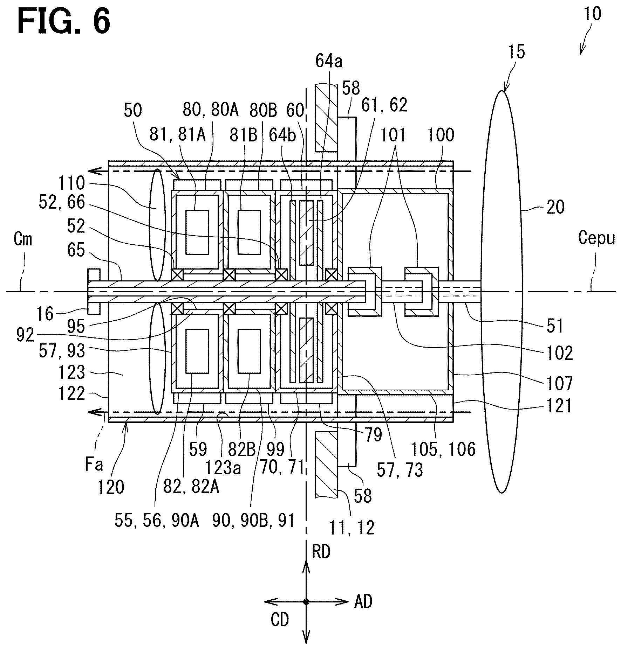

As shown in FIG. 6, the gear device 100 and the motor device 60 overlap each other in the axial direction AD. The gear device 100 and the motor device 60 are fixed to each other. For example, the gear housing 105 and the motor housing 70 are fixed by fixing tools such as bolts. The fixing tools fix the gear outer peripheral wall 106 and the motor outer peripheral wall 71. The gear outer peripheral wall 106 and the motor outer peripheral wall 71 are aligned in the axial direction AD. For example, the gear outer peripheral wall 106 and the motor outer peripheral wall 71 are aligned in the axial direction AD such that the respective outer peripheral surfaces are flush with each other.

The EPU fan 110 is provided downwind of the motor device 60 and the inverter device 80. The EPU fan 110 is provided opposite to the gear device 100 with the motor device 60 and the inverter device 80 interposed therebetween. The EPU fan 110 is on the opposite side of the propeller 20 with the motor housing 70 and the inverter housing 90 interposed therebetween. The EPU fan 110 is located at a position away from the second duct port 122 toward the inverter device 80. The cooling air Fa is sucked into the EPU fan 110 and flows through outer peripheral flow path 123a in the axial direction AD along the outer peripheral surface of the EPU housing 55.

In the present embodiment, since the EPU fan 110 is provided downstream of the motor device 60 and the inverter device 80, the cooling air Fa becomes an airflow in which the EPU fan 110 draws air from an upstream side of the duct. Therefore, a pressure loss when the cooling air Fa flows through the outer peripheral flow path 123a tends to be small. For example, the pressure loss of the cooling air Fa can be reduced as compared with a configuration in which the EPU fan 110 is provided upstream of the motor device 60 and the inverter device 80 and the EPU fan 110 causes the cooling air Fa to flow to push air. Therefore, the EPU fan 110 can be rotated with less power, and the cooling air Fa can efficiently flow with less power. Therefore, a structure of the EPU fan 110 can be simplified, and as a result, a weight of the EPU fan 110 and the like can be reduced.

### Third Embodiment

In the first embodiment described above, the multiple inverter devices 80 individually include the inverter housings 90. Meanwhile, in a third embodiment, the inverter housing 90 is shared by the multiple inverter devices 80. Configurations, operations, and effects not particularly described in the third embodiment are the same as those in the first embodiment. In the third embodiment, differences from the first embodiment will be mainly described.

In the third embodiment, the EPU fan 110 is provided on the opposite side of the propeller 20 with the motor device 60 and the inverter device 80 interposed therebetween, as in the second embodiment. A position of the EPU fan 110 is the same in fourth to sixth embodiments.

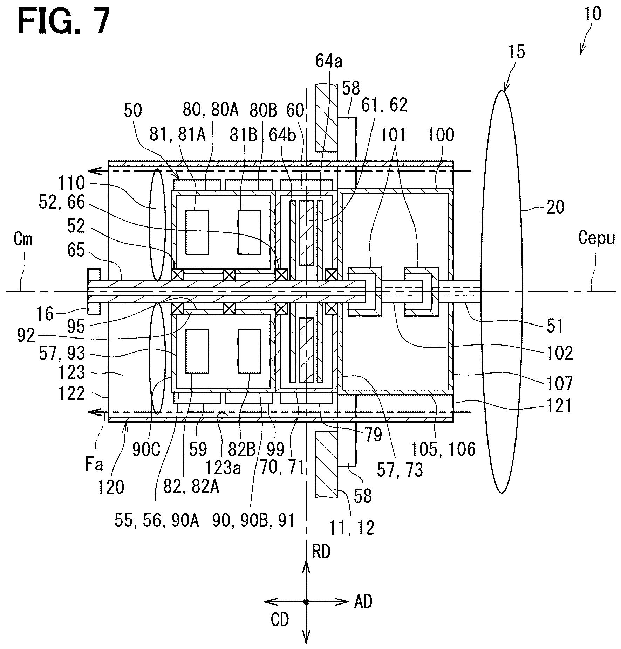

As shown in FIG. 7, the EPU housing 55 includes a common inverter housing 90C as the inverter housing 90. The common inverter housing 90C is shared by the first inverter device 80A and the second inverter device 80B. In the common inverter housing 90C, a portion in the first inverter device 80A forms the first inverter housing 90A, and a portion in the second inverter device 80B forms the second inverter housing 90B.

In the common inverter housing 90C, the internal space of the first inverter housing 90A and the internal space of the second inverter housing 90B are continuous spaces. In the common inverter housing 90C, the inverter facing wall 93 is not provided at the boundary portion between the first inverter housing 90A and the second inverter housing 90B. In the common inverter housing 90C, the inverter facing wall 93 is not provided between the first inverter 81A and the second inverter 81B and between the first inverter control unit 82A and the second inverter control unit 82B.

In the present embodiment, the common inverter housing 90C is the inverter housing 90 shared by the multiple inverter devices 80. The inverter device 80 is greatly affected by heat received from the motor device 60 in terms of thermal design. On the other hand, since the common inverter housing 90C is shared by the multiple inverter devices 80, a degree of freedom in arrangement of the inverter 81 and the inverter control unit 82 in each of the multiple inverter devices 80 can be increased. For example, the multiple inverter devices 80 can share a circuit board. In this case, the inverters 81 and the inverter control units 82 of the multiple inverter devices 80 can share the circuit board.

In the present embodiment, the common inverter housing 90C is shared by the first inverter device 80A and the second inverter device 80B. Therefore, a degree of freedom in arrangement of internal components for two channels, that is, the first inverter device 80A and the second inverter device 80B can be increased. That is, a degree of freedom in designing the arrangement of the first inverter 81A, the first inverter control unit 82A, the second inverter 81B, and the second inverter control unit 82B can be increased inside the common inverter housing 90C. For example, among the components constituting the inverters 81A and 81B and the inverter control units 82A and 82B, a thermally weak component can be thermally protected by disposing the thermally weak component at a position far from the motor device 60. As described above, regarding the component arrangement of the inverter devices 80A and 80B, the weight reduction can be achieved by optimizing the thermal design. By optimizing the thermal design, the number of arranged elements can be reduced.

### Fourth Embodiment

In the first embodiment described above, the motor device 60 is provided between the propeller 20 and the multiple inverter devices 80 in the axial direction AD. Meanwhile, in a fourth embodiment, the motor device 60 is provided between two inverter devices 80 adjacent to each other in the axial direction AD. Configurations, operations, and effects not particularly described in the fourth embodiment are the same as those in the first embodiment. In the fourth embodiment, differences from the first embodiment will be mainly described.

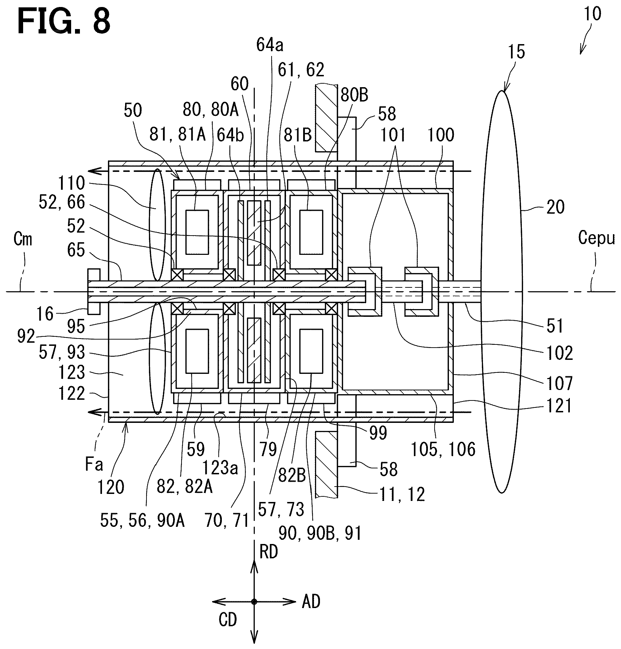

As shown in FIG. 8, the motor device 60 is provided between the first inverter device 80A and the second inverter device 80B. The motor device 60 is fixed to each of the first inverter device 80A and the second inverter device 80B. The motor housing 70 is fixed to each of the first inverter housing 90A and the second inverter housing 90B.

In the present embodiment, the EPU fixing portion 58 is provided at a position closer to the second inverter housing 90B than to the motor housing 70. In the axial direction AD, a distance between the EPU fixing portion 58 and the second inverter housing 90B is smaller than a distance between the EPU fixing portion 58 and the motor housing 70. The second inverter housing 90B is provided between the EPU fixing portion 58 and the motor housing 70.

The second inverter housing 90B supports the motor device 60 and the first inverter device 80A while being fixed with respect to the EPU fixing portion 58. The second inverter housing 90B has a strength necessary for supporting the motor device 60 and the first inverter device 80A. For example, the strength of the second inverter housing 90B is higher than the strength of the first inverter housing 90A. The strength of the second inverter housing 90B is higher than the strength of the motor housing 70 or is substantially the same as the strength of the motor housing 70.

In the second inverter housing 90B, the inverter outer peripheral wall 91 has a strength necessary for supporting the motor device 60 and the first inverter device 80A. For example, in the second inverter housing 90B, the strength of the inverter outer peripheral wall 91 is equal to or higher than the strength of the motor outer peripheral wall 71. In the second inverter housing 90B, the thickness dimension of the inverter outer peripheral wall 91 is equal to or larger than the thickness dimension of the motor outer peripheral wall 71. The configuration in which the thickness dimension of the inverter outer peripheral wall 91 is equal to or larger than the thickness dimension of the motor outer peripheral wall 71 includes a configuration in which the thickness dimension of the inverter outer peripheral wall 91 is substantially the same as the thickness dimension of the motor outer peripheral wall 71.

The strength of the inverter outer peripheral wall 91 is higher in the second inverter housing 90B than in the first inverter housing 90A. For example, the thickness dimension of the inverter outer peripheral wall 91 is larger in the second inverter housing 90B than in the first inverter housing 90A. In the present embodiment, while the strength for supporting the motor device 60 is secured by the second inverter housing 90B, the weight reduction of the EPU 50 is achieved by weight reduction of the first inverter housing 90A.

In the present embodiment, the second inverter housing 90B supports the motor device 60. Therefore, it is necessary to secure the strength of the second inverter housing 90B, which is disadvantageous from a viewpoint of the weight reduction of the second inverter housing 90B. On the other hand, both the first inverter device 80A and the second inverter device 80B are adjacent to the motor device 60 in the axial direction AD. In the configuration, both electric wiring or the like connecting the first inverter device 80A and the motor device 60 and electric wiring or the like connecting the second inverter device 80B and the motor device 60 can be shortened. Therefore, it is advantageous from the viewpoint of simplifying the electrical wiring and the like in the EPU 50.

### Fifth Embodiment

In the fourth embodiment described above, the motor device 60 is provided between the two inverter devices 80 adjacent to each other in the axial direction AD. Meanwhile, in a fifth embodiment, the multiple inverter devices 80 are provided between the propeller 20 and the motor device 60 in the axial direction AD. Configurations, operations, and effects not particularly described in the fifth embodiment are the same as those in the first embodiment. In the fifth embodiment, differences from the first embodiment will be mainly described.

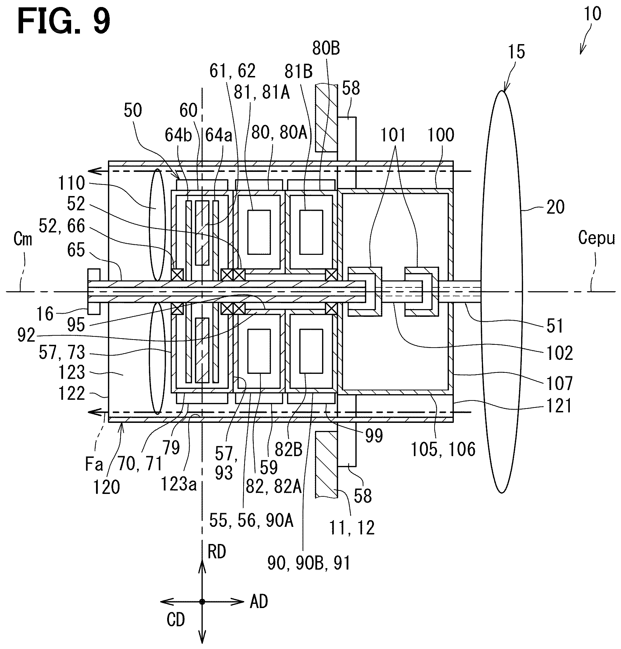

As shown in FIG. 9, the first inverter device 80A and the second inverter device 80B are provided between the propeller 20 and the motor device 60 in the axial direction AD. In the axial direction AD, the motor device 60 and the first inverter device 80A are located at positions adjacent to each other. The motor device 60 is fixed to the first inverter device 80A. The motor housing 70 is fixed to the first inverter housing 90A.

In the present embodiment, the EPU fixing portion 58 is provided at a position closer to the inverter housings 90A and 90B than to the motor housing 70. In the axial direction AD, the distances between the EPU fixing portion 58 and the inverter housings 90A and 90B are smaller than the distance between the EPU fixing portion 58 and the motor housing 70. The inverter housings 90A and 90B are provided between the EPU fixing portion 58 and the motor housing 70.

The inverter housings 90A and 90B support the motor device 60 while being fixed to the EPU fixing portion 58. Each of the inverter housings 90A, 90B has a strength necessary for supporting the motor device 60. For example, the strength of each of the inverter housings 90A, 90B is higher than the strength of the motor housing 70 or substantially the same as the strength of the motor housing 70.

In each of the inverter housings 90A and 90B, the inverter outer peripheral wall 91 has a strength necessary for supporting the motor device 60. For example, in each of the inverter housings 90A and 90B, the strength of the inverter outer peripheral wall 91 is equal to or higher than the strength of the motor outer peripheral wall 71. In each of the inverter housings 90A and 90B, the thickness dimension of the inverter outer peripheral wall 91 is equal to or larger than the thickness dimension of the motor outer peripheral wall 71.

In the present embodiment, both of the inverter housings 90A and 90B support the motor device 60. Therefore, it is necessary to ensure the strength of each of the inverter housings 90A and 90B, which is disadvantageous from the viewpoint of the weight reduction of the inverter housings 90A and 90B. Meanwhile, since the motor housing 70 is disposed at the end portion of the EPU housing 55 in the axial direction AD, heat is easily released from the motor housing 70. For example, in the motor housing 70, since one of the motor facing walls 73 is exposed to the outside air, heat is easily released from the motor facing wall 73 to the outside air. Therefore, a heat dissipation effect of the motor device 60 can be enhanced.

Both the first inverter device 80A and the second inverter device 80B are aligned with the gear device 100 in the axial direction AD without the motor device 60 interposed therebetween. Therefore, it is not necessary to bypass the electric wiring or the like connecting the inverter devices 80A and 80B and the gear device 100 to avoid the motor 61. This is advantageous from the viewpoint of simplifying the electrical wiring and the like connected to the inverter devices 80A and 80B and the gear device 100.

### Sixth Embodiment

In the first embodiment described above, the EPU fixing portion 58 is provided on the gear device 100. Meanwhile, in a sixth embodiment, the EPU fixing portion 58 is provided between the propeller 20 and the motor device 60 in the axial direction AD. Configurations, operations, and effects not particularly described in the sixth embodiment are the same as those in the first embodiment. In the sixth embodiment, differences from the first embodiment will be mainly described.

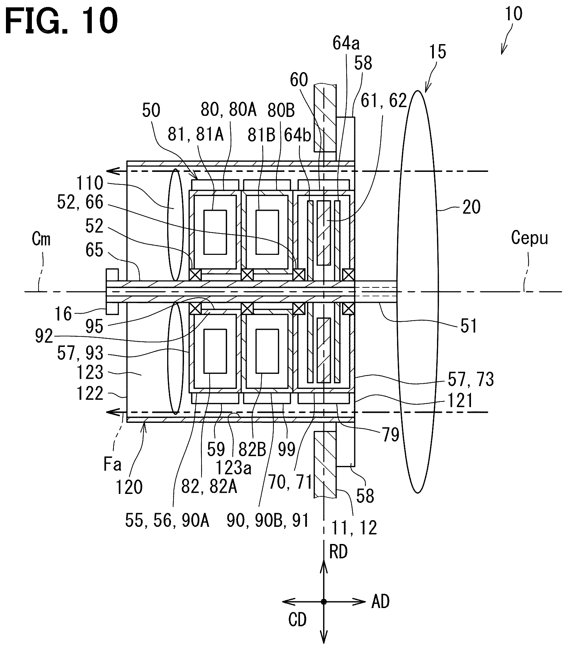

As shown in FIG. 10, the EPU fixing portion 58 is included in the motor housing 70. The EPU fixing portion 58 is provided on the motor outer peripheral wall 71. The EPU fixing portion 58 extends from the motor outer peripheral wall 71 toward the radially outer side. For example, the EPU fixing portion 58 is provided at an end portion of the motor outer peripheral wall 71 opposite to the inverter device 80. The EPU fixing portion 58 may be provided at a position away from the EPU duct 120 in the axial direction AD. In the configuration, the EPU fixing portion 58 does not need to penetrate the EPU duct 120.

The motor housing 70 supports the inverter devices 80A and 80B while being fixed to the airframe 11 via the EPU fixing portion 58. The motor housing 70 has a strength necessary for supporting the weight of the motor device 60 and the inverter devices 80A and 80B. The strength of the motor housing 70 is higher than the strength of each of the inverter housings 90A, 90B. The motor housing 70 corresponds to the high-strength housing.

According to the present embodiment, the EPU fixing portion 58 is provided on the motor housing 70. Since the strength of the motor housing 70 is higher than the strength of each of the inverter housings 90A and 90B, strength insufficiency of the motor housing 70 in terms of the EPU fixing portion 58 supporting the EPU 50 can be prevented.

In the present embodiment, the EPU 50 does not include the gear device 100. The EPU fixing portion 58 may be provided on the motor housing 70 regardless of whether the EPU 50 includes the gear device 100. For example, in a configuration in which the EPU 50 includes the gear device 100, the EPU fixing portion 58 may be provided on the motor housing 70.

The EPU fixing portion 58 may be provided on the inverter device 80. For example, the EPU fixing portion 58 may be provided on the inverter outer peripheral wall 91. The inverter housing 90 having the configuration supports the motor device 60 while being fixed to the airframe 11 via the EPU fixing portion 58. The inverter housing 90 has a strength necessary for supporting the motor device 60. For example, in a configuration in which the EPU 50 includes the gear device 100, the inverter housing 90 has a strength necessary for supporting the gear device 100 in addition to the motor device 60.

### Seventh Embodiment

In the first embodiment described above, the EPU 50 includes only one motor device 60. Meanwhile, in a seventh embodiment, the EPU 50 includes multiple motor devices 60. Configurations, operations, and effects not particularly described in the seventh embodiment are the same as those in the first embodiment. In the seventh embodiment, differences from the first embodiment will be mainly described.

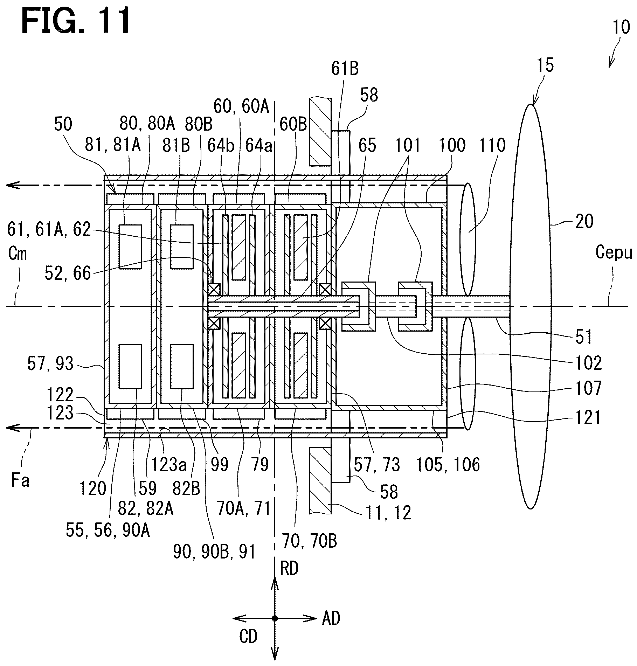

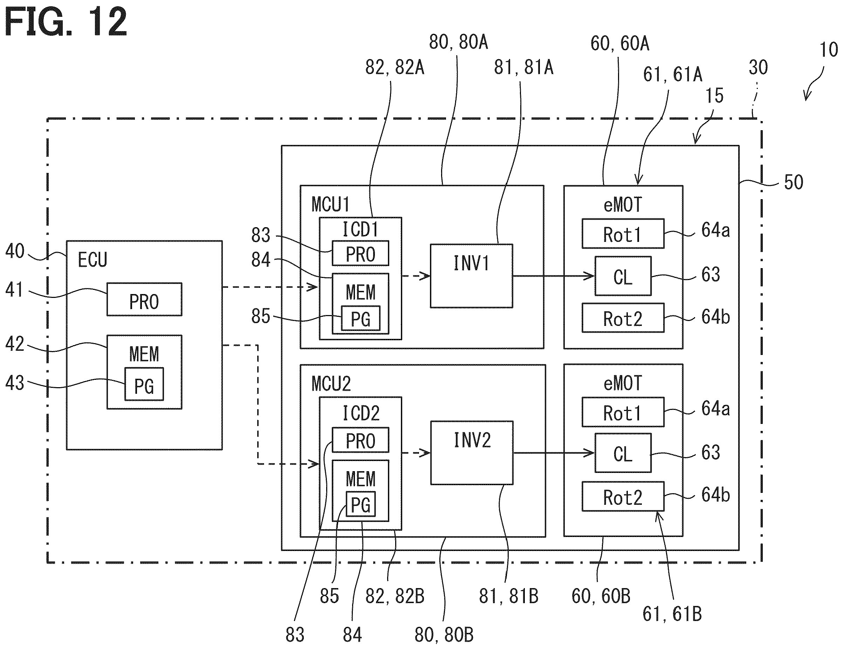

As shown in FIGS. 11 and 12, the EPU 50 includes a first motor device 60A and a second motor device 60B as the motor device 60. The first motor device 60A includes a first motor 61A as the motor 61. The second motor device 60B includes a second motor 61B as the motor 61.

In the present embodiment, the first inverter device 80A drives the first motor device 60A. For example, the first inverter control unit 82A drives the first motor 61A via the first inverter 81A. The second inverter device 80B drives the second motor device 60B. For example, the second inverter control unit 82B drives the second motor 61B via the second inverter 81B. In FIG. 12, the first motor device 60A is illustrated as eMOT 1, and the second motor device 60B is illustrated as eMOT 2.

The first motor 61A and the second motor 61B each has one individual coil. As in the first embodiment, the individual coil is an n-phase coil. In each of the first motor 61A and the second motor 61B, the motor coil 63 is a 1 ×n-phase coil. Each of the first motor 61A and the second motor 61B is driven as 1×n-phase motor. In the present embodiment, in each of the first motor 61A and the second motor 61B, the motor coil 63 is a three-phase coil. Each of the first motor 61A and the second motor 61B is a three-phase motor.

As shown in FIG. 11, the motor devices 60A and 60B are provided between the propeller 20 and the inverter devices 80A and 80B in the axial direction AD. The first motor device 60A and the second motor device 60B are aligned in the axial direction AD. The first inverter device 60A and the second inverter device 60B are provided at positions adjacent to each other without the inverter devices 80A and 80B interposed therebetween. The first motor device 60A and the second motor device 60B overlap each other. The first motor device 60A and the second motor device 60B are provided coaxially. A center line of the first motor device 60A and a center line of the second motor device 60B coincide with the motor axis Cm.

The first motor device 60A and the second motor device 60B are fixed to each other. The first motor device 60A includes a first motor housing 70A as the motor housing 70. The second motor device 60B includes a second motor housing 70B as the motor housing 70. The first motor housing 70A and the second motor housing 70B overlap each other in the axial direction AD.

In the first motor housing 70A and the second motor housing 70B, the respective motor facing walls 73 overlap each other. The motor facing walls 73 are provided at a boundary portion between the first motor housing 70A and the second motor housing 70B. The motor facing walls 73 separate an internal space of the first motor housing 70A and an internal space of the second motor housing 70B. The motor facing walls 73 are located between the first motor 61A and the second motor 61B.

The first motor housing 70A and the second motor housing 70B are fixed by fixing tools such as bolts. The fixing tools fix the motor outer peripheral walls 71 of the first motor housing 70A and the second motor housing 70B. The motor outer peripheral walls 71 are aligned in the axial direction AD. For example, the outer peripheral surfaces of the motor outer peripheral walls 71 are aligned in the axial direction AD to be flush with each other.

One of the first motor device 60A and the second motor device 60B is provided on an inverter devices 80A and 80B side, and the other is provided on a side facing the gear device 100. For example, the first motor device 60A is provided between the second inverter device 80B and the second motor device 60B in the axial direction AD. The first motor device 60A is fixed to the second inverter device 80B. The second motor device 60B is fixed to the gear device 100.

The second motor device 60B supports the first motor device 60A while being fixed to the EPU fixing portion 58. A strength of the second motor housing 70B is equal to or higher than a strength of the first motor housing 70A. For example, the motor outer peripheral wall 71 of the second motor housing 70B has higher strength than the motor outer peripheral wall 71 of the first motor housing 70A. The strength of the second motor housing 70B is a strength sufficient to support the first motor device 60A. In the present embodiment, the weight reduction of the EPU 50 is achieved by making the strength of the first motor housing 70A lower than the strength of the second motor housing 70B.

In the EPU 50, at least one motor device 60 rotates the propeller 20. For example, when the EPU 50 is normal, the integrated control unit 40 rotates the propeller 20 by driving both the first motor device 60A and the second motor device 60B. The integrated control unit 40 controls the first inverter device 80A such that the first motor device 60A is driven, and controls the second inverter device 80B such that the second motor device 60B is driven.

On the other hand, when the EPU 50 is not normal, the integrated control unit 40 stops driving of at least one of the first motor device 60A and the second motor device 60B. For example, when only an abnormality related to the first motor device 60A in the first motor device 60A and the second motor device 60B occurs, the integrated control unit 40 stops the driving of the first motor device 60A and drives the second motor device 60B. When only an abnormality related to the second motor device 60B occurs, the integrated control unit 40 drives the first motor device 60A and stops the driving of the second motor device 60B. Further, when both the abnormality related to the first motor device 60A and the abnormality related to the second motor device 60B occur, the integrated control unit 40 stops the driving of both the first motor device 60A and the second motor device 60B.

Examples of the abnormality related to the first motor device 60A include an abnormality of the first motor device 60A and an abnormality of the first inverter device 80A. Examples of the abnormality related to the second motor device 60B include an abnormality of the second motor device 60B and an abnormality of the second inverter device 80B.

### Eighth Embodiment

In the first embodiment described above, the cooling air Fa generated by the EPU fan 110 flows in the same direction as the propeller wind. Meanwhile, in an eighth embodiment, the wind generated by the air cooling fan flows in a direction opposite to the propeller wind. Configurations, operations, and effects not particularly described in the eighth embodiment are the same as those in the first embodiment. In the eighth embodiment, differences from the first embodiment will be mainly described.

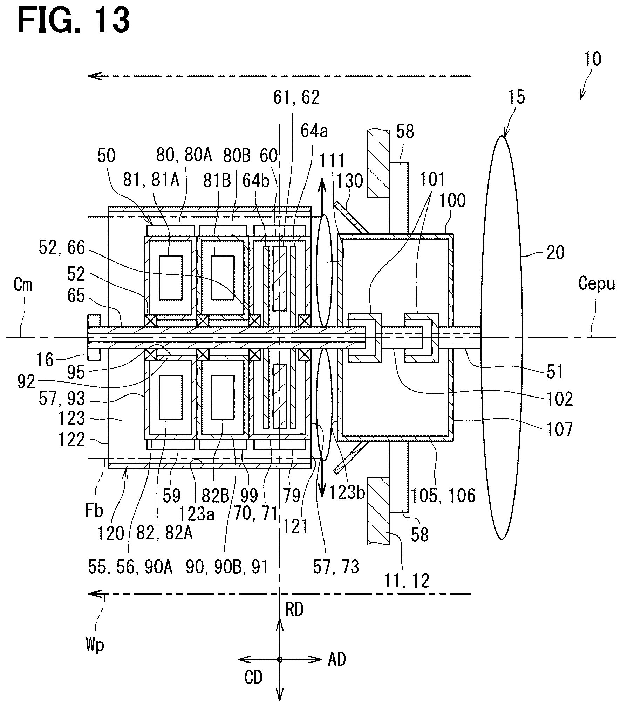

As shown in FIG. 13, the EPU 50 includes a backflow fan 111. The backflow fan 111 can cause air to flow in the axial direction AD in order to cool the EPU housing 55. The backflow fan 111 blows air such that reverse cooling air Fb flows in the axial direction AD. The reverse cooling air Fb flows in a direction opposite to the cooling air Fa of the first embodiment. That is, the reverse cooling air Fb flows in a direction opposite to propeller wind Wp. The reverse cooling air Fb is a flow of gas flowing in the axial direction AD. The reverse cooling air Fb is generated as the backflow fan 111 rotates. With respect to the propeller wind Wp, the backflow fan 111 is provided on the downwind side of the propeller 20. The backflow fan 111 corresponds to an air cooling fan. The backflow fan 111 is provided on the EPU shaft 51. The backflow fan 111 rotates together with the EPU shaft 51 as the motor device 60 is driven.

The backflow fan 111 is provided downstream of the EPU duct 120 with respect to the reverse cooling air Fb. The backflow fan 111 blows air such that gas in the duct space 123 is sucked, thereby causing the reverse cooling air Fb to flow through the outer peripheral flow path 123a. The backflow fan 111 discharges the reverse cooling air Fb sucked in the duct space 123 toward the radially outer side to the outside of the EPU duct 120. The reverse cooling air Fb is discharged toward the radially outer side from between the EPU duct 120 and the EPU fixing portion 58 and between the EPU duct 120 and the airframe 11 in the axial direction AD. The EPU duct 120 may be provided with discharge holes for discharging the reverse cooling air Fb toward the radially outer side.

The EPU 50 includes a duct hood 130. The duct hood 130 is provided to cover the EPU duct 120 and the backflow fan 111 from a side facing the propeller 20. The duct hood 130 is provided between the backflow fan 111 and the propeller 20 in the axial direction AD. The duct hood 130 extends in a direction orthogonal to the axial direction AD to guide the reverse cooling air Fb toward the radially outer side. For example, the duct hood 130 extends from the gear housing 105 toward the radially outer side. The duct hood 130 shields the propeller wind Wp such that the propeller wind Wp does not flow into the duct space 123. The duct hood 130 restricts the propeller wind Wp from interfering with the reverse cooling air Fb. The EPU fixing portion 58 may have a function of shielding the propeller wind Wp.

The EPU duct 120 and the backflow fan 111 may be provided in any manner as long as the reverse cooling air Fb is generated in the outer peripheral flow path 123a. For example, the backflow fan 111 may be provided downstream of the motor housing 70 or the inverter housing 90 with respect to the reverse cooling air Fb. The backflow fan 111 may be provided upstream of the gear housing 105 with respect to the reverse cooling air Fb. In the configuration, the gear housing 105 is preferably accommodated in the EPU duct 120. The backflow fan 111 may be provided inside the EPU duct 120.

According to the present embodiment, the backflow fan 111 causes the reverse cooling air Fb to flow in a direction opposite to the propeller wind Wp in the axial direction AD. In the configuration, a flow of foreign matter such as water droplets and dust in the axial direction AD along with a flow of the reverse cooling air Fb tends to be restricted by the propeller wind Wp. Since the reverse cooling air Fb is air for cooling the EPU 50, the reverse cooling air Fb tends to be weaker than the propeller wind Wp. Therefore, around the EPU 50, the foreign matter is more likely to be blown away by the propeller wind Wp than approaching or coming into contact with the motor device 60 or the inverter device 80 due to the flow of the reverse cooling air Fb. Therefore, in the EPU 50, it is possible to reduce occurrence of inconvenience such as an abnormality due to the foreign matter approaching or coming into contact with the motor device 60 or the inverter device 80.

According to the present embodiment, in the outer peripheral flow path 123a, the propeller wind Wp and the reverse cooling air Fb flow in opposite directions in the axial direction AD. In the configuration, even if the foreign matter is present around the second duct port 122, the foreign matter tends to be blown away from the second duct port 122 by the propeller wind Wp. That is, the foreign matter is restricted from entering the outer peripheral flow path 123a from the second duct port 122 together with the reverse cooling air Fb by the propeller wind Wp. Therefore, a decrease in cooling effect of the EPU 50 due to accumulation of the foreign matter in the outer peripheral flow path 123a can be limited by the propeller wind Wp.

According to the present embodiment, the backflow fan 111 is provided between the propeller 20 and the EPU housing 55 in the axial direction AD. In the configuration, the backflow fan 111 blows air such that gas around the EPU housing 55 is sucked toward the propeller 20 against the propeller wind Wp, and thus the reverse cooling air Fb flows along the EPU housing 55. Therefore, a pressure loss caused by the reverse cooling air Fb can be reduced. Therefore, the reverse cooling air Fb can more effectively flow while preventing the foreign matter from flowing into the outer peripheral flow path 123a. As a result, the safety of the eVTOL 10 can be improved by a positional relationship of the backflow fan 111, the propeller 20, and the EPU housing 55.

For example, a configuration is assumed in which, unlike the present embodiment, the backflow fan 111 is provided opposite to the propeller 20 with the EPU housing 55 interposed therebetween. In the configuration, since the backflow fan 111 blows air such that the gas around the EPU housing 55 is pushed toward the propeller 20, the pressure loss caused by the reverse cooling air Fb is likely to increase.

The EPU shaft 51 connects the propeller 20 and the motor device 60, and may be referred to as a connection portion. The backflow fan 111 is provided between the connection portion and the EPU housing 55 in the axial direction AD. That is, the backflow fan 111 is provided at a position at which a distance between the backflow fan 111 and the connection portion is smaller than a distance between the EPU housing 55 and the connection portion in the axial direction AD.

According to the present embodiment, the duct hood 130 is provided between the propeller 20 and the outer peripheral flow path 123a in the axial direction AD to perform blocking between the outer peripheral flow path 123a and the propeller 20. In the configuration, the duct hood 130 can restrict the propeller wind Wp from flowing into the outer peripheral flow path 123a from the first duct port 121 against the reverse cooling air Fb. Therefore, the duct hood 130 can limit interfering of the propeller wind Wp with the reverse cooling air Fb in the outer peripheral flow path 123a, and the decrease in cooling effect of the EPU 50 caused by the reverse cooling air Fb. When the propeller wind Wp interferes with the reverse cooling air Fb, a flow rate of the reverse cooling air Fb flowing through the outer peripheral flow path 123a decreases by an amount of the propeller wind Wp, or it is difficult for the reverse cooling air Fb to flow through the outer peripheral flow path 123a. In the configuration, the duct hood 130 can prevent the foreign matter from entering the outer peripheral flow path 123a together with the propeller wind Wp.

### Ninth Embodiment

In the eighth embodiment described above, the EPU 50 includes the duct hood 130. Meanwhile, in a ninth embodiment, the EPU 50 does not include the duct hood 130. Configurations, operations, and effects not particularly described in the ninth embodiment are the same as those in the eighth embodiment. In the ninth embodiment, differences from the eighth embodiment will be mainly described.

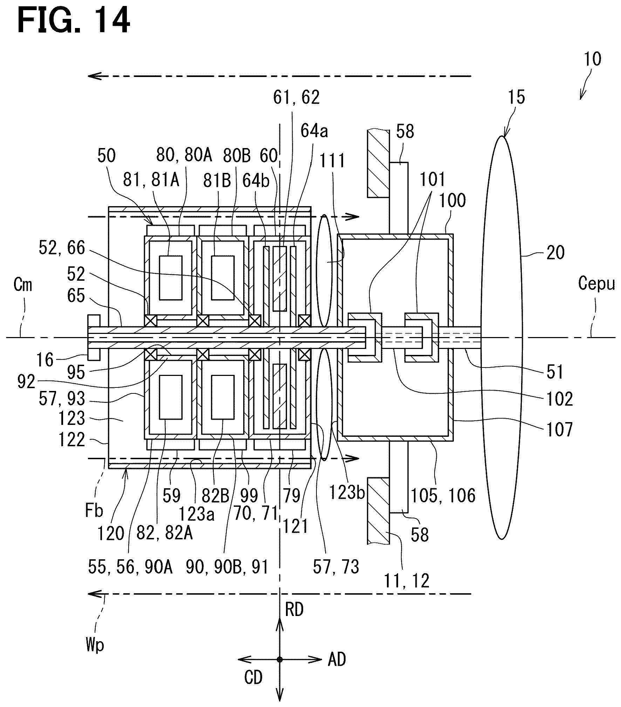

As shown in FIG. 14, unlike the eighth embodiment, the duct hood 130 is not provided between the EPU housing 55 and the propeller 20 and between the EPU duct 120 and the propeller 20 in the axial direction AD. Therefore, the propulsion device 15 has no configuration in which blocking between the outer peripheral flow path 123a and the propeller 20 is performed by the duct hood 130. The propulsion device 15 may have a configuration such that the propeller wind Wp is less likely to flow from the first duct port 121 into the outer peripheral flow path 123a even if the duct hood 130 is not present. For example, the shape or the angle of the blade 21 may be set such that the propeller wind Wp is less likely to flow into the first duct port 121.

### Tenth Embodiment

In the eighth embodiment described above, the number of motor devices 60 and the number of inverter devices 80 are different in the EPU 50. Meanwhile, in a tenth embodiment, the number of motor devices 60 and the number of inverter devices 80 are the same in the EPU 50. Configurations, operations, and effects not particularly described in the tenth embodiment are the same as those in the eighth embodiment. In the tenth embodiment, differences from the eighth embodiment will be mainly described.

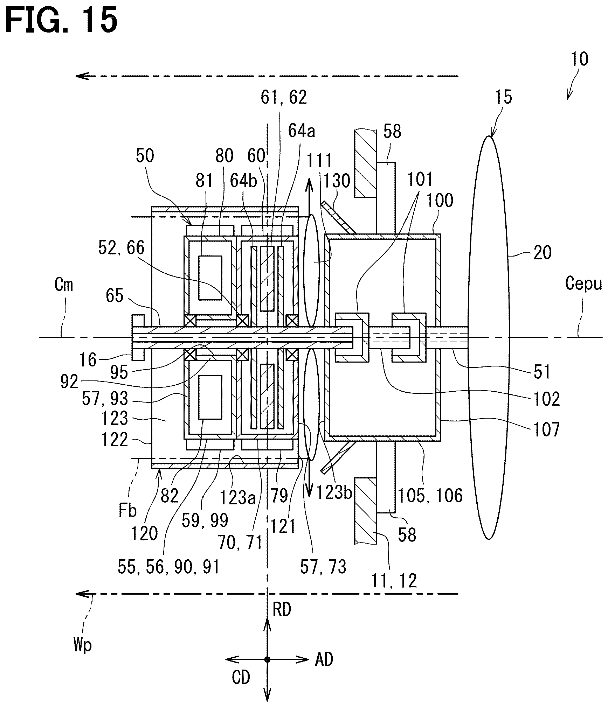

As shown in FIG. 15, one EPU 50 includes one motor device 60 and one inverter device 80. Therefore, in the EPU 50, one inverter device 80 drives one motor device 60. The motor device 60 and the inverter device 80 may have any positional relationship. For example, the inverter device 80 may be provided between the motor device 60 and the propeller 20 in the axial direction AD.

### Eleventh Embodiment

In the eighth embodiment described above, multiple inverter devices 80 are aligned in the axial direction AD in the EPU 50. Meanwhile, in an eleventh embodiment, multiple inverter devices 80 are aligned in the circumferential direction CD in the EPU 50. Configurations, operations, and effects not particularly described in the eleventh embodiment are the same as those in the eighth embodiment. In the eleventh embodiment, differences from the eighth embodiment will be mainly described.

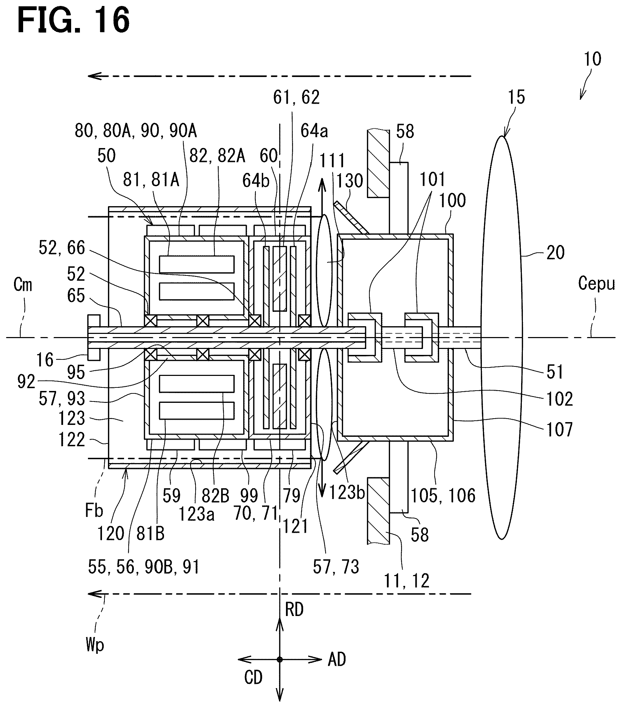

As shown in FIG. 16, in the EPU 50, multiple inverter devices 80 are aligned in the circumferential direction CD. Each of the multiple inverter devices 80 is located at a position adjacent to the motor device 60 in the axial direction AD. In the EPU 50, the multiple inverter housings 90 are aligned in the circumferential direction CD. In a configuration in which the EPU 50 includes two inverter devices 80, two inverter housings 90 formed in a semi-annular shape are aligned in the circumferential direction CD. In the EPU 50, the inverter housing hole 95 is formed by combining the multiple inverter housings 90. In the EPU 50, multiple inverters 81 and multiple inverter control units 82 are aligned in the circumferential direction CD. The multiple inverter devices 80 may be aligned in the radial direction RD.

### Twelfth Embodiment

In a twelfth embodiment, gas flows inside the motor housing 70. Configurations, operations, and effects not particularly described in the twelfth embodiment are the same as those in the eighth embodiment. In the twelfth embodiment, differences from the eighth embodiment will be mainly described.

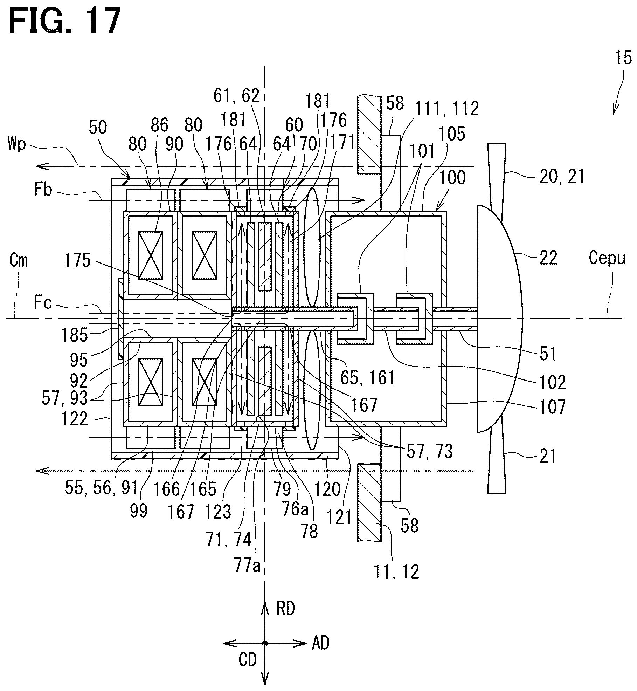

As shown in FIG. 17, the backflow fan 111 is provided on the motor shaft 65. The backflow fan 111 rotates together with the motor shaft 65. The backflow fan 111 includes backflow blades 112. The backflow blades 112 are provided on the motor shaft 65. Each of the backflow blades 112 extends from the motor shaft 65 toward the radially outer side. Multiple backflow blades 112 are aligned in the circumferential direction CD. The multiple backflow blades 112 are coupled by the motor shaft 65.

In the backflow fan 111, a rotation direction of the backflow fan 111 and a direction of the backflow blades 112 are set such that the reverse cooling air Fb flows in a direction opposite to the propeller wind Wp. For example, in the backflow fan 111, the rotation direction of the backflow fan 111 is the same as the rotation direction of the propeller 20, while the direction of the backflow blades 112 is opposite to the direction of the blades 21 of the propeller 20. In the backflow fan 111, a direction in which the backflow blades 112 are inclined with respect to the motor axis Cm in the circumferential direction CD is opposite to a direction in which the blades 21 are inclined with respect to the motor axis Cm in the circumferential direction CD. With respect to the reverse cooling air Fb, the EPU 50 is on the windward side of the propeller 20.

As shown in FIG. 17, the motor housing 70 has a motor space 171. The motor space 171 is an internal space of the motor housing 70. The motor 61 is accommodated in the motor space 171. The motor housing 70 includes a motor outer wall 74. The motor outer wall 74 forms an outer surface and an inner surface of the motor housing 70. The motor outer wall 74 defines the motor space 171. The motor outer wall 74 includes the motor outer peripheral wall 71 and the motor facing walls 73.

The motor outer wall 74 has a motor outer surface 76 and a motor inner surface 77. The motor outer surface 76 is an outer surface of the motor outer wall 74. The motor inner surface 77 is an inner surface of the motor outer wall 74. The motor inner surface 77 defines the motor space 171. The motor outer surface 76 is provided outside the motor inner surface 77. The motor fins 79 are provided on the motor outer surface 76.

In the motor device 60, gas flows through the motor space 171. In the motor space 171, a reverse internal air Fc flows as the backflow fan 111 rotates. The reverse internal air Fc is a flow of gas such as outside air. The reverse internal air Fc flows to pass through the motor space 171, and thus heat and the like of the motor 61 can be released to the outside of the motor device 60.

The motor housing 70 has a motor inflow hole 175 and motor outflow holes 176. The motor inflow hole 175 is a hole for allowing gas to flow into the motor space 171. For example, the reverse internal air Fc flows into the motor space 171 from the motor inflow hole 175. The motor inflow hole 175 penetrates the motor outer wall 74 to open the motor space 171 to the outside of the motor housing 70. The motor inflow hole 175 opens the motor space 171 toward the downwind side of the propeller wind Wp. The motor inflow hole 175 corresponds to a housing inflow hole.

The motor inflow hole 175 is provided in the motor facing wall 73 on the downwind side of the propeller wind Wp among the pair of motor facing walls 73. For example, the motor inflow hole 175 is provided in the motor facing wall 73 provided opposite to the propeller 20 among the pair of motor facing walls 73. The motor inflow hole 175 penetrates the motor facing wall 73 in the axial direction AD. The motor inflow hole 175 extends in the axial direction AD to span the motor outer surface 76 and the motor inner surface 77.

The motor inflow hole 175 is provided at a center of the motor facing wall 73. The motor inflow hole 175 is located at a position away from the motor outer peripheral wall 71 toward the inner peripheral side. That is, the motor inflow hole 175 is located at a position away from the motor outflow holes 176 toward the inner peripheral side in the radial direction RD. The motor inflow hole 175 is located at a position closer to the motor axis Cm than the motor outer peripheral wall 71 is in the radial direction RD. In the radial direction RD, a distance between the motor inflow hole 175 and the motor axis Cm is smaller than a distance between each of the motor outflow holes 176 and the motor axis Cm.

Each of the motor outflow hole 176 is a hole for allowing gas to flow out of the motor housing 70 from the motor space 171. For example, the reverse internal air Fc flows out from the motor space 171 through the motor outflow hole 176. The motor outflow hole 176 penetrates the motor outer wall 74 to open the motor space 171 to the outside of the motor housing 70. The motor outflow hole 176 opens the motor space 171 toward the outer peripheral flow path 123a. The motor outflow hole 176 connects the motor space 171 and the outer peripheral flow path 123a to allow ventilation therebetween. The motor outflow hole 176 corresponds to a housing outflow hole. The motor outflow hole 176 is also a discharge hole for discharging the heat of the motor 61 to the outside.

The backflow fan 111 blows air such that the reverse internal air Fc flows out from the motor space 171 to the outer peripheral flow path 123a through the motor outflow hole 176. The backflow fan 111 blows air to cause gas to flow. The backflow fan 111 corresponds to a blower fan. The EPU duct 120 covers the motor outflow hole 176 from outside such that the motor outflow hole 176 is not exposed to the outer peripheral side. The EPU duct 120 corresponds to an outer duct.

The motor outflow hole 176 is provided in the motor outer peripheral wall 71. The motor outflow hole 176 penetrates the motor outer peripheral wall 71 in the radial direction RD. The motor outflow hole 176 spans a motor outer peripheral wall outer surface 76a and a motor outer peripheral wall inner surface 77a of the motor outer peripheral wall 71. Multiple motor outflow holes 176 are arranged in the circumferential direction CD. The motor outflow holes 176 are aligned with the motor fins 79 in the axial direction AD. Multiple motor outflow holes 176 are arranged in the axial direction AD. The motor fin 79 is provided between two motor outflow holes 176 adjacent to each other in the axial direction AD.

The motor device 60 includes motor seals 181. The motor seals 181 are provided on the motor housing 70 to open and close the motor outflow holes 176. Each of the motor seal 181 is implemented by a valve member, an opening/closing member, a lip seal, or the like. The motor seals 181 are individually provided for the multiple motor outflow holes 176.

The motor seal 181 can be shifted between a closed state in which the motor outflow hole 176 is closed and an open state in which the motor outflow hole 176 is opened. When being in the closed state, the motor seal 181 restricts ventilation of the motor outflow hole 176. In this case, the motor seal 181 restricts the reverse internal air Fc from flowing out from the motor outflow hole 176 to the outer peripheral flow path 123a. The closed state of the motor seal 181 corresponds to a restricted state. The motor seal 181 corresponds to an outflow restriction portion.

When being in the open state, the motor seal 181 opens the motor outflow hole 176 to allow ventilation of the motor outflow hole 176. In this case, the motor seal 181 permits the reverse internal air Fc to flow out from the motor outflow hole 176 to the outer peripheral flow path 123a. The open state of the motor seal 181 corresponds to a permitted state.

The motor seal 181 is made of a resin material, a rubber material, or the like so as to be elastically deformable. The motor seal 181 has a ventilation blocking property of blocking ventilation. The motor seal 181 covers the motor outflow hole 176 from an outer peripheral flow path 123a side. The motor seal 181 is fixed to the motor outer wall 74 in a state where the motor seal 181 can be shifted between the closed state and the open state. The motor seal 181 extends along the motor outer surface 76 to cover the motor outflow hole 176.

The motor seal 181 has a fixed end fixed to the motor outer wall 74 and a free end not fixed to the motor outer wall 74. The motor seal 181 is shifted from the closed state to the open state by the free end elastically deforming to separate outward from the motor outer wall 74. The motor seal 181 corresponds to an elastic restriction portion.

When an external force is applied to the motor seal 181 by the reverse cooling air Fb or the reverse internal air Fc, the motor seal 181 is elastically deformed to shift from the closed state to the open state. For example, when the reverse internal air Fc pushes the motor seal 181 toward the outer peripheral side, the motor seal 181 is shifted from the closed state to the open state by a pressing force of the reverse internal air Fc. When the pressing force of the reverse internal air Fc becomes smaller than a restoring force of the motor seal 181, the motor seal 181 is shifted from the open state to the closed state by the own restoring force.

In the motor housing 70, when an internal pressure becomes higher than an external pressure such that the motor seal 181 is elastically deformed, the motor seal 181 is shifted from the closed state to the open state due to the internal pressure. The internal pressure is a pressure of the gas in the motor space 171. The external pressure is a pressure of the gas in the outer peripheral flow path 123a. When the internal pressure decreases to such an extent that the restoring force of the motor seal 181 is exerted, the motor seal 181 is shifted from the open state to the closed state by the own restoring force.

When a flow of the reverse cooling air Fb is strong, a force of the reverse cooling air Fb to suck the motor seal 181 toward the outer peripheral flow path 123a acts on the motor seal 181, and thus the motor seal 181 is shifted from the closed state to the open state. In this case, the reverse cooling air Fb tends to draw out the gas in the motor space 171 from the motor outflow hole 176 as the reverse internal air Fc. An intensity of the reverse cooling air Fb is defined by an amount and a speed of the reverse cooling air Fb. Examples of the case where the flow of the reverse cooling air Fb is strong include a case where the amount and speed of the reverse cooling air Fb are large enough to shift the motor seal 181 from the closed state to the open state. When the flow of the reverse cooling air Fb is weak, the motor seal 181 is shifted from the open state to the closed state by the own restoring force.

When the flow of the reverse cooling air Fb is strong, the reverse cooling air Fb turns over the motor seal 181 such that the free end of the motor seal 181 floats from the motor outer surface 76, and thus the motor seal 181 is shifted from the closed state to the open state. In this case, the reverse cooling air Fb also draws out the reverse internal air Fc from the motor outflow hole 176, and thus the reverse internal air Fc flows.

In the EPU 50, the reverse internal air Fc flows from the motor inflow hole 175 into the motor space 171 through an internal space of the motor shaft 65. The motor shaft 65 is formed in a tubular shape as a whole. The motor shaft 65 has a shaft space 165. The shaft space 165 is the internal space of the motor shaft 65. The motor space 171 is open to the outside of the EPU 50 through the shaft space 165.

The motor shaft 65 is formed in a tubular shape as a whole. The motor shaft 65 includes a shaft outer wall 161. The shaft outer wall 161 is an outer wall of the motor shaft 65. The shaft outer wall 161 forms an outer surface and an inner surface of the motor shaft 65. The shaft outer wall 161 defines the shaft space 165. The shaft outer wall 161 extends in a wall shape along the outer surface and the inner surface of the motor shaft 65. The shaft outer wall 161 extends in the axial direction AD along the motor axis Cm.

The motor shaft 65 penetrates the motor housing 70 in the axial direction AD. On the motor shaft 65, the backflow fan 111 is provided at a portion extending from the motor housing 70 toward the propeller 20. In the motor shaft 65, an end portion of the shaft outer wall 161 is exposed to the outside of the motor housing 70 through the motor inflow hole 175. For example, in the motor shaft 65, the shaft outer wall 161 enters the motor inflow hole 175.

The motor shaft 65 has a shaft inflow hole 166 and shaft outflow holes 167. The shaft inflow hole 166 and the shaft outflow holes 167 are provided in the shaft outer wall 161. The shaft inflow hole 166 penetrates the shaft outer wall 161 in the axial direction AD. The shaft inflow hole 166 is provided in a portion of the motor outer wall 74 exposed to the outside of the motor housing 70. The shaft inflow hole 166 opens the shaft space 165 to the outside of the motor housing 70. The gas flowing into the shaft space 165 through the shaft inflow hole 166 flows into the motor space 171 through the motor inflow hole 175.

The shaft inflow hole 166 and the motor inflow hole 175 are opened to the outside of the EPU 50 through the inverter housing hole 95. The shaft inflow hole 166 and the motor inflow hole 175 are aligned with the inverter housing hole 95 in the axial direction AD. The shaft inflow hole 166 connects an internal space of the inverter housing hole 95 and the shaft space 165 to allow ventilation therebetween. The reverse internal air Fc flows into the shaft space 165 from the shaft inflow hole 166 through the inverter housing hole 95. The motor inflow hole 175 connects the internal space of the inverter housing hole 95 and the motor space 171 to allow ventilation therebetween. The reverse internal air Fc flows into the motor space 171 from the motor inflow hole 175 through the inverter housing hole 95.

Each of the shaft outflow holes 167 penetrates the shaft outer wall 161 in the radial direction RD. The shaft outflow hole 167 is provided in a portion of the motor outer wall 74 accommodated in the motor space 171. The shaft outflow hole 167 opens the shaft space 165 to the motor space 171. That is, the shaft outflow hole 167 connects the shaft space 165 and the motor space 171 to allow ventilation therebetween. Multiple shaft outflow holes 167 are arranged in the circumferential direction CD. Multiple shaft outflow holes 167 are arranged in the axial direction AD. The reverse internal air Fc flowing into the shaft space 165 from the shaft inflow hole 166 flows out to the motor space 171 from the shaft outflow holes 167.

The EPU 50 includes an air filter 185. The air filter 185 allows gas to pass therethrough, and can remove foreign matter such as water, dust, and dust from the gas. For example, the air filter 185 allows the reverse internal air Fc to flow into the motor space 171 from the motor inflow hole 175, and restricts the foreign matter from flowing into the motor space 171 from the motor inflow hole 175 together with the reverse internal air Fc. The air filter 185 is formed in a sheet shape by a filter member such as nonwoven fabric. The air filter 185 corresponds to a foreign matter restriction portion. The air filter 185 may be referred to as a dust filter.

The air filter 185 is provided to cover the motor inflow hole 175 and the shaft inflow hole 166 from the axial direction AD. For example, the air filter 185 covers the motor inflow hole 175 from the axial direction AD through the inverter housing hole 95. The air filter 185 is provided on the inverter housing 90 to cover the inverter housing hole 95 from a side opposite to the propeller 20. The air filter 185 is fixed to the inverter facing wall 93 by an adhesive or the like. The air filter 185 extends in a direction orthogonal to the axial direction AD.

According to the present embodiment, the motor inflow hole 175 opens the motor space 171 to the outside of the motor housing 70. In the configuration, the reverse internal air Fc flows into the motor space 171 from the outside of the motor housing 70, and thus heat dissipation of the motor 61 is promoted by the reverse internal air Fc. Therefore, a heat dissipation effect of the propulsion device 15 can be enhanced by the motor inflow hole 175. The motor inflow hole 175 opens the motor space 171 toward the downwind side of the propeller wind Wp. In the configuration, the propeller wind Wp is less likely to directly flow into the motor inflow hole 175. Therefore, entering of the foreign matter into the motor space 171 from the motor inflow hole 175 together with the propeller wind Wp can be limited. Therefore, it is possible to prevent a situation in which the foreign matter flows into the motor housing 70 while gas flows into the motor housing 70, and to effectively cool the motor 61.

### Thirteenth Embodiment

In the twelfth embodiment described above, the backflow fan 111 is provided between the motor device 60 and the propeller 20. Meanwhile, in a thirteenth embodiment, the backflow fan 111 is provided on a side opposite to the propeller 20 with the motor device 60 interposed therebetween. Configurations, operations, and effects not particularly described in the thirteenth embodiment are the same as those of the twelfth embodiment. In the thirteenth embodiment, differences from the twelfth embodiment will be mainly described.

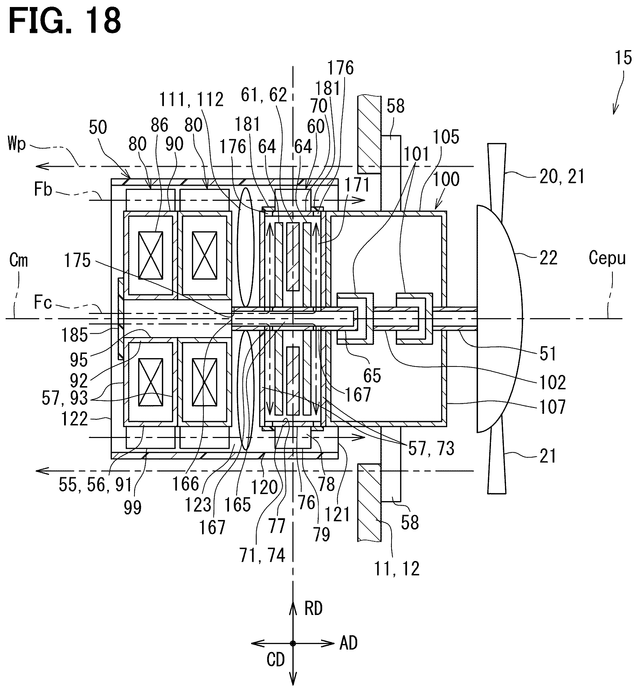

As shown in FIG. 18, the backflow fan 111 is provided between the motor device 60 and the inverter device 80 in the axial direction AD. That is, the backflow fan 111 is provided between the motor housing 70 and the inverter housing 90 in the axial direction AD. The motor housing 70 and the inverter housing 90 are aligned in the axial direction AD with the backflow fan 111 interposed therebetween. The motor shaft 65 protrudes from the motor housing 70 toward the inverter housing 90. The backflow fan 111 is provided at a portion of the motor shaft 65 protruding from the motor housing 70 toward the inverter housing 90.

According to the present embodiment, the backflow fan 111 is provided between the motor device 60 and the inverter device 80 in the axial direction AD. The backflow fan 111 is provided on the side opposite to the propeller 20 with the motor device 60 interposed therebetween. In the configuration, the backflow fan 111 blows air such that the gas around the inverter device 80 is sucked toward the propeller 20 against the propeller wind Wp, and thus the reverse cooling air Fb flows along the inverter device 80. Therefore, the pressure loss of the reverse cooling air Fb flowing around the inverter device 80 can be reduced. Therefore, the reverse cooling air Fb can more effectively flow while limiting the foreign matter passing through the inverter device 80 in the outer peripheral flow path 123a.

### Other Embodiments

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

In each of the embodiments described above, the EPU fixing portion 58 may be provided at any portion of the EPU housing 55. The EPU fixing portion 58 may be provided on at least one of the gear housing 105, the motor housing 70, and the inverter housing 90. For example, the EPU fixing portion 58 may be individually provided on each of the gear housing 105 and the motor housing 70. The EPU fixing portion 58 may be provided on the inverter housing 90. In the configuration, the inverter housing 90 preferably has such a sufficiently high strength that the strength of the inverter housing 90 is not insufficient for the EPU fixing portion 58 to support the EPU 50.

In each of the embodiments described above, the EPU fixing portion 58 may be any portion of the EPU housing 55. For example, in a configuration in which a fixing-hole is provided in the EPU outer peripheral wall 56, the fixing-hole and a peripheral portion of the fixing-hole in the EPU outer peripheral wall 56 are included in the EPU fixing portion 58. In the configuration, the EPU fixing portion 58 may not have a projection portion.

In each of the embodiments described above, the motor housing 70 may be shared by the multiple motor devices 60. For example, in the seventh embodiment described above, the first motor device 60A and the second motor device 60B may share the motor housing 70. In the configuration, the motor facing walls 73 are not provided between the first motor 61A and the second motor 61B. The multiple inverter devices 80 may share the inverter housing 90, as in the third embodiment. The motor device 60 and the inverter device 80 may share a common housing. For example, the motor facing walls 73 and the inverter facing walls 93 may not be provided between the motor 61 and the inverter 81 and between the motor 61 and the inverter control unit 82.

In each of the embodiments described above, the multiple components may be arranged in any manner in the EPU 50. For example, the gear device 100 and the EPU fan 110 may be provided between the motor device 60 and the inverter device 80 in the axial direction AD. The gear device 100, the EPU fan 110, and the inverter device 80 may be provided between two motor devices 60 adjacent to each other in the axial direction AD. Further, the gear device 100, the EPU fan 110, and the motor device 60 may be provided between two inverter devices 80 adjacent to each other in the axial direction AD.

Two components adjacent to each other in the axial direction AD may be provided at positions separated from each other in the axial direction AD. For example, two motor devices 60 adjacent to each other in the axial direction AD may be provided at positions away from each other in the axial direction AD. Two inverter devices 80 adjacent to each other in the axial direction AD may be provided at positions away from each other in the axial direction AD.

In each of the embodiments described above, the EPU 50 may include at least one motor device 60 and multiple inverter devices 80. For example, the EPU 50 may include multiple motor devices 60 and inverter devices 80 more than the motor devices 60. One inverter device 80 may drive multiple motor devices 60. For example, in the seventh embodiment described above, when an abnormality occurs in one of the inverter devices 80A and 80B, the other may drive both of the motor devices 60A and 60B.

In each of the embodiments described above, the EPU fan 110 may not be accommodated in the EPU duct 120. For example, the EPU fan 110 may be provided upwind or downwind of the EPU duct 120 in the axial direction AD. The EPU duct 120 may not have to accommodate all of the gear device 100, the motor device 60, and the inverter device 80. For example, the EPU duct 120 may accommodate at least one of the gear device 100, the motor device 60, and the inverter device 80. The EPU 50 may not include the EPU fan 110 and the EPU duct 120. The EPU duct 120 may be made of a resin material, a rubber material, or the like.

In each of the embodiments described above, the motor 61 may not be a dual-rotor motor. For example, the motor 61 may be a single-rotor motor. The motor 61 may not be an axial gap-type motor. For example, the motor 61 may be a radial gap-type motor. In the radial gap-type motor, the rotor and the stator are aligned in the radial direction RD.

In each of the embodiments described above, the flight control device may include at least one of the integrated control unit 40 and the inverter control unit 82. For example, the flight control device may include only the inverter control unit 82 among the integrated control unit 40 and the inverter control unit 82. In the configuration, the inverter control unit 82 performs the flight control process.

In each of the embodiments described above, the vertical take-off and landing aircraft on which the propulsion device 15 is mounted may be an electric-type vertical take-off and landing aircraft in which at least one propeller 20 is driven by at least one EPU 50. For example, one propeller 20 may be driven by multiple EPUs 50, or multiple propellers 20 may be driven by one EPU 50.

In each of the embodiments described above, the flight vehicle on which the propulsion device 15 is mounted may not be the vertical take-off and landing aircraft as long as being of an electric type. For example, the flight vehicle may be a flight vehicle capable of taking off and landing while gliding, as an example of the electric aircraft. The flight vehicle may be a rotorcraft, or a fixed-wing aircraft. The flight vehicle may be an unmanned flight vehicle carrying no person.

In each of the embodiments described above, the moving object on which the propulsion device 15 is mounted may not be a flight vehicle as long as the moving object is movable by rotation of the rotary body. For example, the moving object may be a vehicle, a ship, a construction machine, or an agricultural machine. In the flight vehicle, the propeller 20 corresponds to the rotary body that rotates as the motor device 60 is driven, and the housing fixing portion such as the EPU fixing portion 58 is fixed to the airframe 11. For example, when the moving object is a vehicle, a construction machine, or the like, a moving-wheel or the like corresponds to the rotary body, and the housing fixing portion is fixed to a vehicle body. In this case, the EPU 50 may be provided on an inner side of the wheel.

In each of the embodiments described above, the integrated control unit 40 and the inverter control unit 82 are provided by a control system including at least one computer. The control system includes at least one processor that is hardware. When the processor is referred to as a hardware processor, the hardware processor can be implemented by (i), (ii), or (iii) to be described below.
(i) The hardware processor may be a hardware logic circuit. In this case, the computer is implemented by a digital circuit including many programmed logic units (gate circuits). The digital circuit may include a memory in which at least one of a program and data is stored. The computer may be implemented by an analog circuit. The computer may be implemented by a combination of the digital circuit and the analog circuit.
(ii) The hardware processor may be at least one processor core that executes a program stored in at least one memory. In this case, the computer includes at least one memory and at least one processor core. The processor core is referred to as a CPU, for example. The memory is also referred to as a storage medium. The memory is a non-transitory and tangible storage medium non-temporarily storing "at least one of a program and data" readable by the processor.
(iii) The hardware processor may be a combination of (i) and (ii) described above. (i) and (ii) are provided on different chips or a common chip.

That is, at least one of means and functions provided by the integrated control unit 40 and the inverter control unit 82 can be provided by hardware alone, software alone, or a combination thereof.

### (Disclosure of Technical Ideas)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical idea 1)

A propulsion device (15) is configured to propel a flight vehicle (10) by rotation of a propeller (20). The propulsion device (15) includes: a motor device (60, 60A, 60B) including a motor (61, 61A, 61B) and configured to be driven to propel the flight vehicle; a motor drive device (80, 80A, 80B) including a power conversion unit (81, 81A, 81B) configured to convert electric power to be supplied to the motor and drive the motor device; and a device housing (55) accommodating the motor and the power conversion unit. The motor device is configured to be driven by a plurality of motor drive devices. Each of the motor drive devices is configured to drive at least one motor device. The motor drive devices are aligned with the motor device in an axial direction (AD), in which a rotation axis (Cm) of the motor extends, and aligned with each other in the axial direction.

### (Technical idea 2)

The propulsion device according to technical idea 1, in which the motor drive devices are arranged such that one of the motor drive devices is adjacent to the motor device in the axial direction and the motor drive devices are adjacent to each other in the axial direction without the motor device interposed therebetween.

### (Technical idea 3)

The propulsion device according to technical idea 1 or 2, in which the device housing includes a housing fixing portion (58) to be fixed to an airframe (11) of the flight vehicle, and at least one of the motor drive devices is provided at a position at which a distance between the motor drive device and the housing fixing portion is larger than a distance between the motor device and the housing fixing portion in the axial direction.

### (Technical idea 4)

The propulsion device according to any one of technical ideas 1 to 3, in which the device housing includes a housing fixing portion (58) to be fixed to an airframe (11) of the flight vehicle, and the motor device is provided at a position at which a distance between the motor device and the housing fixing portion is smaller than a distance between the motor drive device and the housing fixing portion in the axial direction.

### (Technical idea 5)

The propulsion device according to any one of technical ideas 1 to 4, in which the device housing includes: a motor housing (70, 70A, 70B) included in the motor device and accommodating the motor, and a motor drive housing (90, 90A, 90B, 90C) included in the motor drive device and accommodating the power conversion unit.

### (Technical idea 6)

The propulsion device according to technical idea 5, in which a strength of the motor drive housing is lower than a strength of the motor housing.

### (Technical idea 7)

The propulsion device according to technical idea 5 or 6, in which the device housing includes a high-strength housing (105,70) having a higher strength than the motor drive housing and a housing fixing portion (58) provided to the high-strength housing and to be fixed to an airframe (11) of the flight vehicle.

### (Technical idea 8)

The propulsion device according to any one of technical ideas 1 to 7, in which the motor device is switchable between driving by all of the motor drive devices and driving by remaining motor drive devices excluding at least one of the motor drive devices.

### (Technical idea 9)

The propulsion device according to any one of technical ideas 1 to 8, in which the motor device is switchable between driving of n phases, which is a plurality of phases, by only one of the motor drive devices and driving of m × n phases, which is a natural number multiplication of the n phases, by all of the motor drive devices.

### (Technical idea 10)

The propulsion device according to any one of technical ideas 1 to 9, in which the motor device is provided between the propeller and the motor drive device in the axial direction.

### (Technical idea 11)

The propulsion device according to any one of technical ideas 1 to 10, in which the motor device and the motor drive device are aligned, in the axial direction, with an air cooling fan (110, 111) that is configured to cause air to flow in the axial direction to cool the device housing.

### (Technical idea 12)

The propulsion device according to technical idea 11, further includes: an outer peripheral duct (120) covering the device housing from an outer peripheral side and forming an outer peripheral flow path (123a) with the device housing to cause air to flow along an outer peripheral surface of the device housing. The air cooling fan is configured to cause air to flow to pass through the outer peripheral flow path in the axial direction.

### (Technical idea 13)

The propulsion device according to technical idea 11 or 12, further includes: a backflow fan (111) configured to, as the air cooling fan, cause air to flow in a direction opposite to air caused to flow by the propeller in the axial direction.

### (Technical idea 14)

The propulsion device according to technical idea 13, in which the backflow fan is provided between the propeller and the device housing in the axial direction.

### (Technical idea 15)

The propulsion device according to technical idea 13 or 14, in which the backflow fan is provided between the motor device and the motor drive device in the axial direction.

### (Technical idea 16)

The propulsion device according to any one of technical ideas 13 to 15, further includes: an outer peripheral duct (120) covering the device housing from an outer peripheral side and forming an outer peripheral flow path (123a) with the device housing; and a duct hood (130) provided between the propeller and the outer peripheral flow path in the axial direction to perform blocking between the outer peripheral flow path and the propeller.

### (Technical idea 17)

The propulsion device according to any one of technical ideas 13 to 16, in which the device housing has a housing inflow hole (175) that opens an internal space (171) of the device housing to an outside of the device housing toward a downwind side of propeller wind (Wp) generated by rotation of the propeller to cause gas to flow from the outside of the device housing into the internal space due to air blowing of the backflow fan.

### (Technical idea 18)

The propulsion device according to any one of technical ideas 1 to 17, in which the motor includes a stator (62) fixed to the device housing, and a rotor (64a, 64b) aligned with the stator in the axial direction.

## Claims

1. A propulsion device (15) configured to propel a flight vehicle (10) by rotation of a propeller (20), the propulsion device (15) comprising:
a motor device (60, 60A, 60B) including a motor (61, 61A, 61B) and configured to be driven to propel the flight vehicle;
a motor drive device (80, 80A, 80B) including a power conversion unit (81, 81A, 81B) configured to convert electric power to be supplied to the motor and drive the motor device; and
a device housing (55) accommodating the motor and the power conversion unit, wherein
the motor device is configured to be driven by a plurality of motor drive devices,
each of the motor drive devices is configured to drive at least one motor device, and
the motor drive devices are aligned with the motor device in an axial direction (AD), in which a rotation axis (Cm) of the motor extends, and aligned with each other in the axial direction.

2. The propulsion device according to claim 1, wherein
the motor drive devices are arranged such that one of the motor drive devices is adjacent to the motor device in the axial direction and the motor drive devices are adjacent to each other in the axial direction without the motor device interposed therebetween.

3. The propulsion device according to claim 1 or 2, wherein
the device housing includes a housing fixing portion (58) to be fixed to an airframe (11) of the flight vehicle, and
at least one of the motor drive devices is provided at a position at which a distance between the motor drive device and the housing fixing portion is larger than a distance between the motor device and the housing fixing portion in the axial direction.

4. The propulsion device according to claim 1 or 2, wherein
the device housing includes a housing fixing portion (58) to be fixed to an airframe (11) of the flight vehicle, and
the motor device is provided at a position at which a distance between the motor device and the housing fixing portion is smaller than a distance between the motor drive device and the housing fixing portion in the axial direction.

5. The propulsion device according to claim 1, wherein
the device housing includes
a motor housing (70, 70A, 70B) included in the motor device and accommodating the motor, and
a motor drive housing (90, 90A, 90B, 90C) included in the motor drive device and accommodating the power conversion unit.

6. The propulsion device according to claim 5, wherein
a strength of the motor drive housing is lower than a strength of the motor housing.

7. The propulsion device according to claim 5 or 6, wherein
the device housing includes
a high-strength housing (105,70) having a higher strength than the motor drive housing and
a housing fixing portion (58) provided to the high-strength housing and to be fixed to an airframe (11) of the flight vehicle.

8. The propulsion device according to claim 1 or 2, wherein
the motor device is switchable between driving by all of the motor drive devices and driving by remaining motor drive devices excluding at least one of the motor drive devices.

9. The propulsion device according to claim 1 or 2, wherein
the motor device is switchable between driving of n phases, which is a plurality of phases, by only one of the motor drive devices and driving of m × n phases, which is a natural number multiplication of the n phases, by all of the motor drive devices.

10. The propulsion device according to claim 1 or 2, wherein
the motor device is provided between the propeller and the motor drive device in the axial direction.

11. The propulsion device according to claim 1 or 2, wherein
the motor device and the motor drive device are aligned, in the axial direction, with an air cooling fan (110, 111) that is configured to cause air to flow in the axial direction to cool the device housing.

12. The propulsion device according to claim 11, further comprising:
an outer peripheral duct (120) covering the device housing from an outer peripheral side and forming an outer peripheral flow path (123a) with the device housing to cause air to flow along an outer peripheral surface of the device housing, wherein
the air cooling fan is configured to cause air to flow to pass through the outer peripheral flow path in the axial direction.

13. The propulsion device according to claim 11, further comprising:
a backflow fan (111) configured to, as the air cooling fan, cause air to flow in a direction opposite to air caused to flow by the propeller in the axial direction.

14. The propulsion device according to claim 13, wherein
the backflow fan is provided between the propeller and the device housing in the axial direction.

15. The propulsion device according to claim 13, wherein
the backflow fan is provided between the motor device and the motor drive device in the axial direction.

16. The propulsion device according to claim 13, further comprising:
an outer peripheral duct (120) covering the device housing from an outer peripheral side and forming an outer peripheral flow path (123a) with the device housing; and
a duct hood (130) provided between the propeller and the outer peripheral flow path in the axial direction to perform blocking between the outer peripheral flow path and the propeller.

17. The propulsion device according to claim 13, wherein
the device housing has a housing inflow hole (175) that opens an internal space (171) of the device housing to an outside of the device housing toward a downwind side of propeller wind (Wp) generated by rotation of the propeller to cause gas to flow from the outside of the device housing into the internal space due to air blowing of the backflow fan.

18. The propulsion device according to claim 1 or 2, wherein
the motor includes
a stator (62) fixed to the device housing, and
a rotor (64a, 64b) aligned with the stator in the axial direction.
